**Europäisches Patentamt**

**European Patent Office**

**Office européen des brevets**

(19)

(11) **EP 1 529 797 A1**

(12) **EUROPÄISCHE PATENTANMELDUNG**

(43) Veröffentlichungstag:
  **11.05.2005 Patentblatt 2005/19**

(51) Int Cl.⁷: **C08J 5/18**, B32B 27/36

(21) Anmeldenummer: **04025891.5**

(22) Anmeldetag: **02.11.2004**

(84) Benannte Vertragsstaaten:
  **AT BE BG CH CY CZ DE DK EE ES FI FR GB GR HU IE IS IT LI LU MC NL PL PT RO SE SI SK TR**
  Benannte Erstreckungsstaaten:
  **AL HR LT LV MK YU**

(30) Priorität: **10.11.2003 DE 10352431**

(71) Anmelder: **Mitsubishi Polyester Film GmbH 65203 Wiesbaden (DE)**

(72) Erfinder:
  • **Pfeiffer, Herbert, Prof. Dr. 55126 Mainz (DE)**

  • **Janssens, Bart, Dr. 65189 Wiesbaden (DE)**
  • **Hilkert, Gottfried, Dr. 55291 Saulheim (DE)**
  • **Konrad, Matthias, Dr. 65719 Hofheim (DE)**

(74) Vertreter: **Schweitzer, Klaus, Dr. et al Patentanwaltskanzlei Zounek, Industriepark Kalle-Albert, Gebäude H391 Rheingaustrasse 190-196 65174 Wiesbaden (DE)**

(54) **Peelfähige Polyesterfolie mit selbsttätiger Entlüftung, Verfahren zu ihrer Herstellung und ihre Verwendung**

(57) Coextrudierte, biaxial orientierte Polyesterfolien, welche eine Basisschicht (B) und eine heißsiegelbare und gegenüber APET/CPET und CPET peelfähige Deckschicht (A) aufweisen, wobei die Deckschicht (A)

a) 80 bis 98 Gew.-% Polyester und
b) 2 bis 10 Gew.-% anorganische und/oder organische Partikel mit einem mittleren Durchmesser $d_{50}$ von 3 bis 12 μm
enthält und wobei
c) der Polyester zu 12 bis 89 Mol-% aus Einheiten aufgebaut ist, die auf mindestens eine aromatische Dicarbonsäure und zu 11 bis 88 Mol-% aus Einheiten aufgebaut ist, die auf mindestens eine aliphatische Dicarbonsäure zurückgehen,

und

d) das Verhältnis aus Teilchengröße $d_{50}$ der Partikel und Schichtdicke $d_A$ der Deckschicht (A) größer/ gleich 1,5 ist,

und der Schrumpf der Folien zumindest in einer Richtung mehr als 5 % beträgt, eignen sich aufgrund ihrer Eigenschaft der selbsttätigen Entlüftung insbesondere als Deckelfolie für APET/CPET oder CPET Menüschalen.

EP 1 529 797 A1

**Beschreibung**

Die Erfindung betrifft eine coextrudierte, peelfähige und biaxial orientierte Polyesterfolie mit einer Basisschicht (B) und mindestens einer auf dieser Basisschicht aufgebrachten Deckschicht (A). Die Deckschicht (A) ist heißsiegelbar und besitzt eine leichte bis feste Peelbarkeit, insbesondere zu PET-Menüschalen. Darüber hinaus zeichnet sich die Folie durch eine selbsttätige Entlüftung aus. Die heißsiegelbare und peelfähige Deckschicht (A) enthält Polyester auf Basis von aromatischen und aliphatischen Säuren und aliphatischen Diolen. Des Weiteren enthält die Deckschicht (A) Partikel. Die Erfindung betrifft weiterhin ein Verfahren zur Herstellung der Folie und ihre Verwendung.

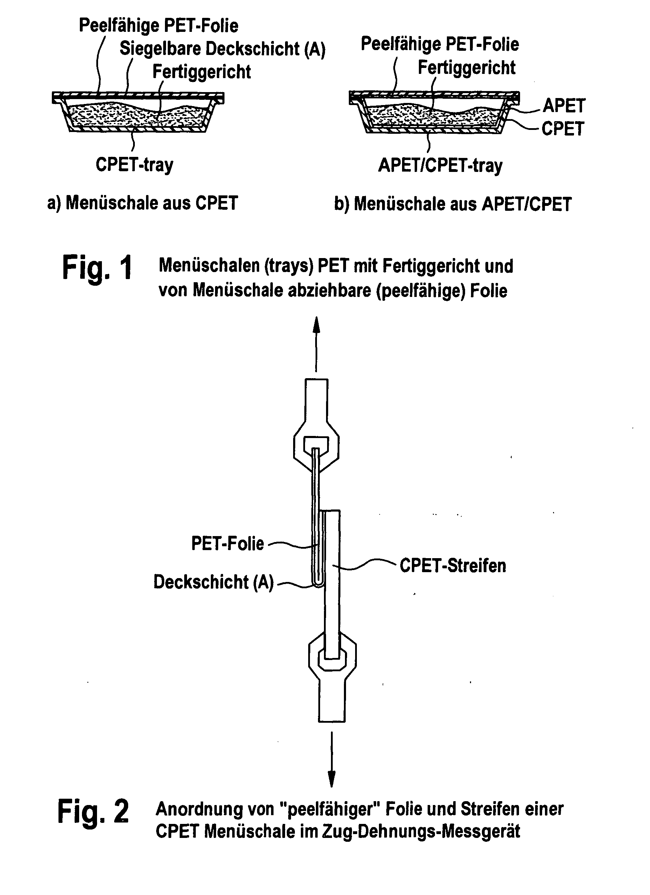

Für Fertiggerichte (engl. ready—prepared meals) sind in Europa die Zuwachsraten derzeit zweistellig. Die Fertiggerichte werden nach ihrer Zubereitung in Menüschalen (engl. trays) eingefüllt (vgl. Figur 1). Auf den Rand der Menüschale wird eine Folie heißgesiegelt, die die Verpackung verschließt und das Fertiggericht gegen äußere Einflüsse schützt. Die Fertiggerichte sind z. B. für die Erhitzung in der Mikrowelle, für die Erhitzung im Backofen oder für die Erhitzung in der Mikrowelle und im Backofen geeignet. Im letztgenannten Fall muss das Fertiggericht und die Verpackung "dual ovenable" (= Mikrowellen- und Backofen fähig) sein. Auf Grund der im Backofen vorherrschenden Temperaturen (bis 220 °C) werden an das Verpackungsmaterial (Menüschale und Deckelfolie) besonders hohe Anforderungen gestellt.

Sowohl für die Menüschale als auch für die Deckelfolie kommen für "dual ovenable"-Anwendungen nur ausgewählte Materialien in Frage. Typische Materialien für die Menüschalen sind in diesem Fall CPET (kristallines PET), Aluminium, mit PET oder mit PET-Folie beschichteter Karton. Bei Menüschalen aus CPET (vgl. Figur 1a) liefert die dicke kristalline und meist pigmentierte, d. h. mit Partikeln gefüllte, CPET-Folie die Stabilität der Schale, auch bei den vergleichsweise hohen Temperaturen im Backofen. Menüschalen aus APET/CPET (vgl. Figur 1 b) bestehen außen aus einer CPET-Schicht und innen, d. h. zum Fertigmenü hin, aus einer APET-Schicht. Die dicke kristalline und meist pigmentierte, d. h. mit Partikeln gefüllte, CPET-Schicht liefert die Stabilität der Schale; das amorphe PET verbessert dagegen im Wesentlichen die Haftung der Folie auf der Menüschale. PET = Polyethylenterephthalat, APET = amorphes PET, CPET = kristallines PET.

Bei "dual ovenable"-Anwendungen wird für die Deckelfolie in der Regel PET verwendet, das selbst bei 220 °C formstabil und fest ist. Materialien wie PP oder PE scheiden hier wegen ihrer niedrigen Schmelzpunkte von vornherein aus. Die Anforderungen an die Deckelfolie werden am besten von biaxial orientierter Polyesterfolie erfüllt.

Bei der Zubereitung des Fertiggerichtes im Ofen wird die Polyesterfolie kurz vor der Erhitzung oder kurz nach der Erhitzung von der Menüschale mit der Hand abgezogen. Hierbei darf die Polyesterfolie auf keinen Fall ein- bzw. ein- und weiter- oder abreißen. Das Abziehen der Folie von der Menüschale, ohne dass dabei die Folie ein-, weiter- oder abreißt, wird in der Lebensmittelbranche auch mit "Peelen" bezeichnet. Für diese Anwendung muss die Polyesterfolie daher nicht nur heißsiegelbar, sondern insbesondere auch peelfähig sein. Bei vorgegebenem Material und vorgegebener Gesamtdicke der Folie wird die Peelfähigkeit der Folie hauptsächlich von den Eigenschaften der Oberflächenschicht der Folie, die auf die Menüschale gesiegelt ist, bestimmt.

Die Peelfähigkeit von Folien lässt sich labormäßig relativ einfach mit einem Spannungs-Dehnungstester (z. B. Fa. Zwick, DE) feststellen (vgl. Figur 2). Für diesen Test werden zunächst aus der Polyesterfolie und der Menüschale zwei 15 mm breite und ca. 50 mm lange Streifen ausgeschnitten und gegeneinander gesiegelt. Die gesiegelten Streifen werden — wie in der Figur 2 dargestellt - in die Kluppen des Testers eingespannt. Der "Winkel" zwischen der in der oberen Kluppe eingespannten Folie und dem Menüschalenstreifen beträgt 180°. Bei diesem Test werden die Kluppen des Testers mit einer Geschwindigkeit von 200 mm/min auseinander gefahren, wobei die Folie im günstigsten Fall von der Menüschale vollständig abgeschält wird (vgl. z. B. ASTM-D 3330).

Bei diesem Test ist im Wesentlichen zwischen zwei unterschiedlichen Mechanismen zu unterscheiden.

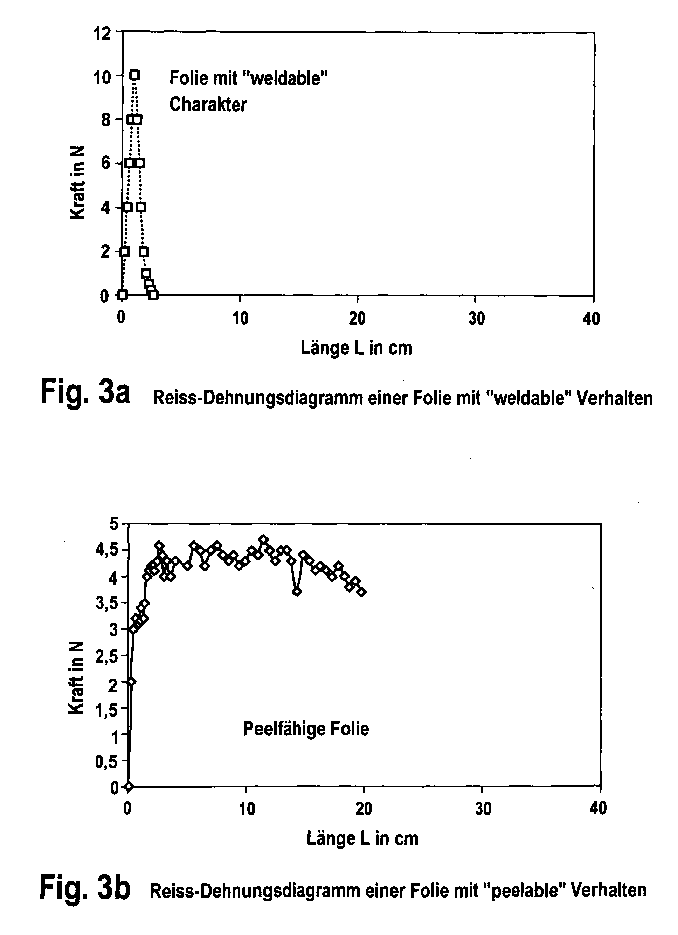

Im ersten Fall steigt beim Ziehvorgang die Zugkraft schnell bis zu einem Maximum an (vgl. Figur 3a) und fällt danach direkt wieder auf Null zurück. Beim Erreichen der Maximalkraft reißt die Folie ein oder vor dem Delaminieren von der Menüschale ab, wodurch die Kraft sofort wieder auf Null zurückgeht. Die Folie ist in diesem Fall nicht peelfähig, da sie zerstört wird. Das Verhalten der Folie lässt sich eher als eine Art "Verschweißen" (engl. weldable) mit der Menüschale beschreiben. Die Zerstörung der Folie beim Abziehen von der Menüschale ist unerwünscht, weil damit das saubere und leichte Öffnen der Verpackung (engl. easy opening) ohne Werkzeuge wie Schere oder Messer erschwert wird.

Eine peelfähige Folie wird dagegen erhalten, wenn die Zug- oder die Schälkraft bis zu einem bestimmten Wert (bzw. bis zu einem bestimmten Plateau) ansteigt und dann über die Strecke, über die die beiden Streifen miteinander gesiegelt sind, in etwa konstant bleibt (vgl. Figur 3b). In diesem Fall reißt die Folie nicht ein, sondern lässt sich wie gewünscht von der Menüschale mit geringem Kraftaufwand abschälen (engl. peelen).

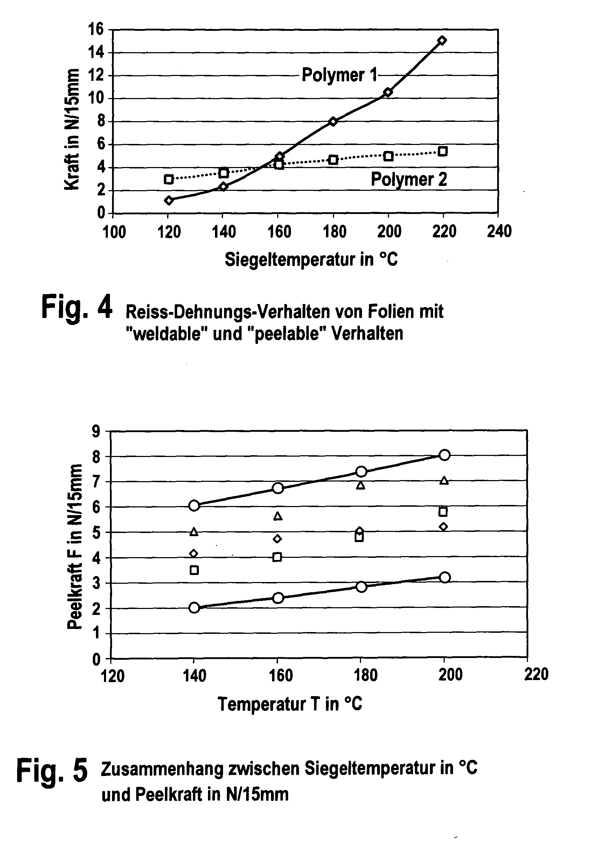

Die Höhe der Peelkraft wird in erster Linie von den in der Siegelschicht (A) verwendeten Polymeren bestimmt (vgl. Figur 4, Polymer 1 und Polymer 2). Daneben ist die Höhe der Peelkraft insbesondere abhängig von der angewandten Heißsiegeltemperatur. Die Peelkraft steigt in der Regel mit der Heißsiegeltemperatur an. Mit zunehmender Heißsiegeltemperaturwächst dabei die Gefahr, dass die Siegelschicht ihre Peelfähigkeit verliert. D. h. eine Folie, die bei Anwendung einer geringen Heißsiegeltemperatur peelfähig ist, verliert diese Eigenschaft, wenn eine genügend hohe Heißsiegeltemperatur angewendet wird. Dieses Verhalten ist insbesondere bei Polymeren zu erwarten, die die in Figur 4 für Polymer 1 gezeigte Charakteristik aufzeigen. Diesem tendenziell allgemeingültigen aberfür die Anwendung eher ungünstigen Verhalten muss bei der Gestaltung der Siegelschicht Rechnung getragen werden. Die Folie muss in einem genügend großen Temperaturbereich heißgesiegelt werden können, ohne dass dabei die gewünschte Peelfähigkeit verloren geht (vgl. Polymer 2 in Figur 4). In der Praxis beträgt dieser Temperaturbereich im Allgemeinen 150 bis 220 °C, bevorzugt 150 bis 200 °C und besonders bevorzugt 150 bis 190 °C.

Beim Erhitzen des Fertiggerichtes gelangt Wasserdampf vom Lebensmittel in den Raum zwischen Lebensmittel und Folie. Der Wasserdampf muss während des Erhitzens abgeführt werden, da ansonsten die Folie oder die Menüschale an einer nicht vorherzubestimmenden Stelle aufplatzen würden. Um dies zu verhindern, ist es notwendig, die Folie vor dem Erhitzen einzustechen. Manchmal wird dies jedoch von dem Verbraucher nicht beachtet oder auch oftmals einfach vergessen. Es ist daher wünschenswert, eine Polyesterfolie bereitzustellen, bei der das Einstechen der Folie vor dem Erhitzen nicht notwendig ist (Folie mit selbsttätiger Entlüftung).

Die heißsiegelbare und peelfähige Schicht wird nach dem Stand der Technik in der Regel mittels so genannter off-line Methoden (d. h. in einem zusätzlichen, der Folienherstellung nachgeordneten Prozessschritt) auf die Polyesterfolie aufgebracht. Bei dieser Methode wird zunächst eine "Standardpolysterfolie" nach einem üblichen Verfahren hergestellt. Die so hergestellte Polyesterfolie wird dann in einem weiteren Verarbeitungsschritt in einer Beschichtungsanlage "off-line" mit einer heißsiegelbaren und peelfähigen Schicht beschichtet. Bei diesem Verfahren wird das heißsiegelbare und peelfähige Polymer zunächst in einem organischen Lösungsmittel aufgelöst. Die fertige Lösung wird dann über ein geeignetes Antragsverfahren (Messergießer, Rasterwalze, Düse) auf die Folie appliziert. In einem nachgeschalteten Trockenofen wird das Lösungsmittel verdunstet und das peelfähige Polymer bleibt als feste Schicht auf der Folie zurück.

Solch ein Off-line-Antrag der Siegelschicht ist aus mehreren Gründen vergleichsweise kostspielig. Erstens muss die Beschichtung der Folie in einem separaten Schritt in einer speziellen Apparatur erfolgen. Zweitens muss das verdampfte Lösemittel wieder kondensiert und rückgewonnen werden, um somit die Umwelt über die Abluft möglichst wenig zu belasten. Drittens ist ein großer Kontrollaufwand erforderlich, um sicherzustellen, dass der Restlösemittelgehalt in der Beschichtung möglichst gering ist.

Außerdem kann in einem wirtschaftlichen Verfahren das Lösemittel nie vollständig während der Trocknung aus der Beschichtung entfernt werden, insbesondere weil der Trocknungsvorgang nicht beliebig lang sein kann. In der Beschichtung verbleibende Spuren des Lösemittels migrieren anschließend über die auf dem Tray befindliche Folie in die Speisen, wo sie den Geschmack verfälschen oder sogar den Konsumenten gesundheitlich schädigen können.

Auf dem Markt werden verschiedene off-line hergestellte peelfähige, heißsiegelbare Polyesterfolien angeboten. Die Polyesterfolien unterscheiden sich im Aufbau und in der Zusammensetzung der Deckschicht (A). Sie gelangen entsprechend ihrer (Peel)-Eigenschaften in unterschiedliche Anwendungen. Es ist z. B. üblich, die Folien von Seiten der Anwendung in Folien mit leichter Peelbarkeit (easy peel), mit fester Peelbarkeit (medium peel) und mit starker, widerstandsfähiger Peelbarkeit (strong peel) zu unterteilen. Wesentliches quantifizierbares Unterscheidungsmerkmal zwischen diesen Folien ist die Höhe der jeweiligen Peelkraft entsprechend der Figur 3b. Eine Einteilung wird an dieser Stelle wie folgt vorgenommen:

| | |
|---|---|
| Leichte Peelbarkeit (easy peel) | Peelkraft im Bereich von ungefähr 1 bis 4 N je 15 mm Streifenbreite |
| Feste Peelbarkeit (medium peel) | Peelkraft im Bereich von ungefähr 3 bis 8 N je 15 mm Streifenbreite |
| Starke, widerstandsfähige Peelbarkeit (strong peel) | Peelkraft im Bereich von mehr als 5 N je 15 mm Streifenbreite |

Eine peelfähige Folie, die beim Erhitzen eine selbsttätige Entlüftung aufweist, ist nach dem Stand der Technik bereits bekannt.

In der WO 02/26493 wird ein Kunststofffolien-Laminat beschrieben, das aus einer Substratfolie besteht, bei der auf der einen Seite eine siegelbare und peelfähige Schicht aufgebracht ist und bei der auf der anderen Seite eine schrumpffähige Folie auflaminiert ist. Die schrumpffähige Folie besitzt einen Schrumpf von 10 bis 80 % in einem Temperaturbereich von 55 bis 100 °C, wobei das Verhältnis aus den Schrumpfwerten in TD-Richtung zur MD-Richtung der Folie im Bereich von 1:1 bis 10:1 liegt. Durch den aufwendigen Laminierprozess wird dem Markt eine relativ teure Lösung zur Verfügung gestellt. Außerdem kann bei zu starkem Schrumpf, bzw. bei einer zu festen Siegelnaht in Verbindung mit zu starkem Schrumpf beobachtet werden, dass sich beim Erhitzen die Menüschale verbiegt und deformiert dem Ofen entnommen wird.

Darüber hinaus sind siegelbare PET-Folien bereits bekannt.

In der EP-A-0 035 835 wird eine coextrudierte siegelfähige Polyesterfolie beschrieben, der zur Verbesserung des Wickel- und des Verarbeitungsverhaltens in der Siegelschicht Partikel beigesetzt werden, deren mittlere Teilchengröße die Schichtdicke der Siegelschicht übersteigt. Das Polymer der Versiegelungsfolienschicht ist im Wesentlichen ein Polyestercopolymer, das auf Basis von aromatischen Dicarbonsäuren sowie aliphatischen Diolen aufgebaut ist. Durch die teilchenförmigen Zusatzstoffe werden Oberflächenvorsprünge gebildet, die ein unerwünschtes Blocken und Kleben der Folie an Walzen oder Führungen verhindern. Durch Wahl von Partikeln mit größerem Durchmesser als die Siegelschicht wird das Siegelverhalten der Folie verschlechtert. Angaben zum Siegeltemperaturbereich der Folie werden in der Schrift nicht gemacht. Die Siegelnahtfestigkeit wird bei 140 °C gemessen und liegt in einem Bereich von 63 bis 120 N/m (entsprechend 0,97 bis 1,8 N/15 mm Folienbreite). Über das Peelverhalten der Folie gegen Menüschalen aus CPET oder APET/CPET finden sich in der Schrift keine Hinweise.

In der EP-A-0 379 190 wird eine coextrudierte, biaxial orientierte Polyesterfolie beschrieben, die eine Trägerfolienschicht aus Polyester und mindestens eine Versiegelungsfolienschicht aus einer Polyester-Zusammensetzung umfasst. Die Versiegelungsfolienschicht kann aliphatische und aromatische Dicarbonsäuren sowie aliphatische Diole enthalten. Das Polymer für die Versiegelungsfolienschicht enthält zwei unterschiedliche Polyester A und B, von denen zumindest einer (Polyester B) aliphatische Dicarbonsäuren und/oder aliphatische Diole enthält. Die Versiegelungsenergie, die zwischen zwei sich gegenüberliegenden, miteinander verbundenen Versiegelungsfolienschichten gemessen wird (= Fin-Siegelung), beträgt mehr als 400g$_{force}$ · cm/15 mm (mehr als 4 N · cm/15 mm), wobei die Versiegelungsfolienschicht anorganische und/oder organische feine Teilchen enthalten kann, die im Polyester nicht löslich sind und wobei die feinen Teilchen in einer Menge von 0,1 bis 5 Gew.-% vorhanden sind, bezogen auf das Gesamtgewicht der Versiegelungsfolienschicht. In den Beispielen der EP-A-0 379 190 werden organische Partikel - sofern sie überhaupt eingesetzt werden in Mengen von maximal 0,3 Gew.-% eingesetzt. Die Folie zeichnet sich zwar durch gute Peeleigenschaften (mit Plateau-Charakter im Peeldiagramm s.o.) gegen sich selbst aus (d. h. Versiegelungsfolienschicht gegen Versiegelungsfolienschicht), über das Peelverhalten gegen Menüschalen aus APET/CPET und CPET finden sich dort jedoch keine Hinweise. Insbesondere aber ist die Folie gemäß dieser Erfindung verbesserungswürdig in ihrer Herstell- und ihrer Verarbeitbarkeit (die Rohstoffe neigen zum Kleben).

In der WO-A-96/19333 wird ein Verfahren zur Herstellung peelfähiger Folien beschrieben, bei dem die heißsiegelbare, peelfähige Schicht in-line auf die Polyesterfolie aufgebracht wird. Bei dem Verfahren werden vergleichsweise geringe Mengen von organischen Lösungsmitteln verwendet. Die heißsiegelbare, peelfähige Schicht enthält einen Copolyester, der

| | |
|---|---|
| 40 bis 90 Mol-% | einer aromatischen Dicarbonsäure, |
| 10 bis 60 Mol-% | einer aliphatischen Dicarbonsäure, |
| 0,1 bis 10 Mol-% | einer Dicarbonsäure enthaltend eine freie Säuregruppe oder ein Salz davon, |
| 40 bis 90 Mol-% | eines Glykols enthaltend 2 bis 12 Kohlenstoffatome und |
| 10 bis 60 Mol-% | eines Polyalkyldiols |

aufweist.

Die Beschichtung wird aus einer wässrigen Dispersion oder einer Lösung, die bis zu 10 Gew.-% organisches Lösungsmittel enthält, an die Folie angetragen. Das Verfahren ist hinsichtlich der verwendbaren Polymere und der erzielbaren Schichtdicken für die heißsiegelbare, peelfähige Schicht eingeschränkt. Die maximal erreichbare Schichtdicke wird mit 0,5 μm angegeben. Die maximale Siegelnahtfestigkeit ist gering, sie beträgt 500 bis 600 g/25 mm$^2$, bzw. [(500 bis 600)/170] N/15 mm Folienbreite.

In der WO 02/059186 A1 wird ein Verfahren zur Herstellung peelfähiger Folien beschrieben, bei dem die heißsiegelbare, peelfähige Schicht ebenfalls in-line auf die Polyesterfolie aufgebracht wird. Die Folien können weiß oder transparent sein. Zur Herstellung der heißsiegelbaren, peelfähigen Schicht wird in diesem Fall die sogenannte Schmelz-Beschichtung (melt-coating) angewendet, wobei vorzugsweise die längsgestreckte Folie mit dem heißsiegelbaren, peelfähigen Polymer beschichtet wird. Das heißsiegelbare, peelfähige Polymer enthält Polyester auf Basis von aromatischen und aliphatischen Säuren, sowie auf Basis von aliphatischen Diolen. Die in den Beispielen offenbarten Copolymere haben Glasübergangstemperaturen von unter -10 °C; solche Copolyester sind zu weich, weshalb sie sich nicht in üblichen Walzenstreckverfahren orientieren lassen (Kleben an den Walzen). Die Dicke der heißsiegelbaren, peelfähigen Schicht beträgt weniger als 8 μm. In der WO 02/059186 A1 wird die an sich bekannte Schmelz-Beschichtung von der an sich bekannten Extrusions-Beschichtung technisch und über die Viskosität der Schmelze abgegrenzt. Nachteilig an dem Verfahren ist, dass nur vergleichsweise dünnflüssige Polymere (max. 50 Pa · s) mit niedrigem Molekulargewicht verwendet werden können. Daraus resultieren nachteilige Peel-Eigenschaften der Folie. Außerdem ist bei diesem Verfahren die Beschichtungsgeschwindigkeit limitiert, wodurch der Herstellungsprozess unwirtschaftlich wird. Qualitätsmäßig zeigen sich Mängel bei der Optik der Folie, die z. B. als Beschichtungsstreifen sichtbar werden. Auch ist es bei diesem Verfahren schwierig, eine über die Bahnbreite der Folie gleichmäßige Dicke der Siegelschicht zu erhalten, was wiederum zu einer ungleichmäßigen Peelcharakteristik führt.

Aufgabe der vorliegenden Erfindung war es, eine heißsiegelbare und peelfähige, biaxial orientierte Polyesterfolie zur Verfügung zu stellen, die sich durch hervorragende Peeleigenschaften insbesondere gegenüber Menüschalen aus APET/CPET oder CPET auszeichnet. Sie bzw. ihre Herstellungsverfahren sollten die Nachteile der Folien nach dem Stand der Technik nicht mehr aufweisen und sich insbesondere dadurch auszeichnen, dass

- sie gegenüber dem CPET und der APET-Seite von Menüschalen aus APET/CPET eine leichte bis feste Peelbarkeit (easy peel bis medium peel) zeigt. Die Peelkraft sollte im Bereich von 1 bis 8 N je 15 mm, bevorzugt im Bereich von 2,0 bis 8 N je 15 mm und besonders bevorzugt im Bereich von 2,5 bis 8 N je 15 mm Folienstreifenbreite liegen;
- in der heißsiegelbaren und peelfähigen Schicht keine organischen Lösemittelrückstände enthalten sind;
- die heißsiegelbare und peelfähige Schicht gegenüber der CPET Menüschale und der APET-Seite von Menüschalen aus APET/CPET eine Mindestsiegeltemperaturvon 165 °C, bevorzugt 160 °C, besonders bevorzugt 155 °C aufweist und wobei die max. Siegeltemperatur im Allgemeinen 220 °C, bevorzugt 200 °C und besonders bevorzugt 190 °C beträgt;
- bei ihrer Herstellung Verfahren angewendet werden, bei denen von vornherein keine organischen Lösemittel verwendet werden;
- sie solche Eigenschaften (Schrumpfcharakteristik und Oberflächentopographie) besitzt, dass sie beim Erhitzen (von Fertiggerichten) in der Mikrowelle als auch im Backofen eine selbsttätige Entlüftung aufweist, ohne dass sich hierbei die Menüschale deformiert;
- sich die Folie wirtschaftlich herstellen lässt. Dies bedeutet beispielsweise auch, dass zur Herstellung der Folie in der Industrie übliche Streckverfahren eingesetzt werden können. Weiterhin sollte die Folie bei heute üblichen Maschinengeschwindigkeiten bis zu 500 m/min herstellbar sein;
- eine gute Haftung (bevorzugt größer als 2 N/15 mm Folienbreite) zwischen den einzelnen Schichten der Folie für deren praktische Anwendung gewährleistet ist;
- bei der Herstellung der Folie gewährleistet ist, dass das Regenerat in einer Menge von bis zu ca. 60 Gew.-% wieder der Extrusion zugeführt werden kann, ohne dass dabei die physikalischen (die Reißfestigkeit der Folie in beiden Richtungen sollte nicht um mehr als 10 % abnehmen), insbesondere aber die optischen Eigenschaften der Folie nennenswert negativ beeinflusst werden.

Außerdem sollte dafür Sorge getragen werden, dass die Folie auf schnelllaufenden Maschinen verarbeitet werden kann. Andererseits sollten sich gleichzeitig die bekannten, Polyesterfolien auszeichnende Eigenschaften, nicht verschlechtern. Hierzu gehören beispielsweise die guten mechanischen Eigenschaften (der E-Modul der biaxial gestreckten Folien sollte in beiden Orientierungsrichtungen größer als 3000 N/mm$^2$, bevorzugt größer als 3500 N/mm$^2$ und besonders bevorzugt größer als 4000 N/mm$^2$ sein), das Wickelverhalten und die Verarbeitbarkeit der Folie, insbesondere bei der Bedruckung, Kaschierung oder bei der Beschichtung der Folie mit metallischen oder keramischen Materialien.

Unter heißsiegelbar wird hier die Eigenschaft einer coextrudierten, mehrschichtigen, mindestens eine Basisschicht (B) aufweisenden Polyester-Folie verstanden, die zumindest eine Deckschicht (= heißsiegelbare Deckschicht) aufweist, die mittels Siegelbacken durch Anwendung von Wärme (140 bis 220 °C) und Druck (2 bis 5 bar) in einer bestimmten Zeit (0,2 bis 2 s) mit sich selbst (Fin-Siegelung), bzw. mit einem Substrat aus thermoplastischem Kunststoff (= Lap-Siegelung, hier insbesondere mit CPET- und APET/CPET - Menüschalen) verbunden werden kann, ohne dass dabei die Trägerschicht (= Basisschicht) selbst plastisch wird. Um dies zu erreichen, besitzt das Polymer der Siegelschicht im Allgemeinen einen deutlich niedrigeren Schmelzpunkt als das Polymer der Basisschicht. Wird als Polymer für die Basisschicht beispielsweise Polyethylenterephthalat mit einem Schmelzpunkt von 254 °C verwendet, so beträgt der Schmelzpunkt der heißsiegelbaren Schicht im Allgemeinen weniger als 230 °C im vorliegenden Fall bevorzugt weniger als 210 °C und besonders bevorzugt weniger als 190 °C.

Unter peelfähig wird hier die Eigenschaft der erfindungsgemäßen Polyester-Folie verstanden, die zumindest eine Schicht (= heißsiegelbare und peelfähige Deckschicht (A)) aufweist, die nach der Heißsiegelung auf ein Substrat derart wieder von dem Substrat abgezogen werden kann, dass dabei die Folie weder ein- noch abreißt. Der Verbund aus heißsiegelfähiger Folie und Substrat geht beim Abziehen der Folie von dem Substrat in der Naht zwischen der Heißsiegelschicht und der Substratoberfläche auf (vgl. auch Ahlhaus, O.E.: Verpackung mit Kunststoffen, Carl Hanser Verlag, S. 271, 1997, ISBN 3-446-17711-6). Beim Abziehen der auf einen Teststreifen des Substrates heißgesiegelten Folie in einem Zug-Dehnungs-Prüfgerät unter einem Schälwinkel von 180° entsprechend Figur 2 wird dann ein Reiß-Dehnverhalten der Folie gemäß Figur 3b erhalten. Bei Beginn des Abschälens der Folie von dem Substrat steigt die dazu erforderliche Kraft gemäß Figur 3b bis zu einem bestimmten Wert (z. B. 4 N/15 mm) an und bleibt dann über den gesamtem Schälweg in etwa konstant, ist allerdings mit mehr oder weiniger großen Schwankungen behaftet (ca. ± 20%).

Gelöst wird die Aufgabe durch die Bereitstellung einer coextrudierten, biaxial orientierten Polyesterfolie, welche eine Basisschicht (B) und eine heißsiegelbare und zumindest gegenüber APET/CPET und CPET peelfähige Deckschicht (A) aufweist, wobei die Deckschicht (A)

a) 80 bis 98 Gew.-% Polyester und

b) 2 bis 10 Gew.-% anorganische und/oder organische Partikel mit einem mittleren Durchmesser $d_{50}$ von 3,0 bis 12,0 µm (jeweils bezogen auf die Masse der Deckschicht (A)) enthält und wobei

c) der Polyester zu 12 bis 89 Mol-% aus Einheiten aufgebaut ist, die auf mindestens eine aromatische Dicarbonsäure und zu 11 bis 88 Mol-% aus Einheiten aufgebaut ist, die auf mindestens eine aliphatische Dicarbonsäure zurückgehen, wobei die Summe der dicarbonsäureabgeleiteten Molprozente 100 ergibt, und

d) das Verhältnis aus Teilchengröße $d_{50}$ und Schichtdicke $d_A$ der Deckschicht (A) größer/gleich 1,5 ist,

und der Schrumpf der Folie zumindest in einer Richtung mehr als 5 % beträgt, gemessen bei 100 °C Umlufttemperatur und einer Dauer von 15 min.

Die Schichtdicke der Deckschicht (A) $d_A$ beträgt 0,7 bis 0,8 µm.

Die oben genannten Parameter sind jeweils als bevorzugte Werte zu verstehen.

Das Material der Deckschicht (A) besteht also überwiegend aus einem Polyester und anorganischen und/oder organischen Partikeln. Der Polyester ist aufgebaut aus Einheiten, die von aromatischen und aliphatischen Dicarbonsäuren abgeleitet sind. Die auf die aromatischen Dicarbonsäuren zurückgehenden Einheiten sind in dem Polyester in einer Menge von bevorzugt 12 bis 89 Mol-%, insbesondere 30 bis 84 Mol-%, besonders bevorzugt 40 bis 82 Mol-%, enthalten. Die auf die aliphatischen Dicarbonsäuren zurückgehenden Einheiten sind in dem Polyester in einer Menge von bevorzugt 11 bis 88 Mol-%, insbesondere 16 bis 70 Mol-%, besonders bevorzugt 18 bis 60 Mol-%, enthalten, wobei die Mol-%-Angaben sich immer zu 100 % ergänzen. Die hierzu korrespondierenden Dioleinheiten ergeben ebenfalls immer 100 Mol-%.

Bevorzugte aliphatische Dicarbonsäuren sind Bernsteinsäure, Pimelinsäure, Korksäure, Azelainsäure, Sebazinsäure, Glutarsäure und Adipinsäure. Besonders bevorzugt sind die Azelainsäure, die Sebazinsäure und die Adipinsäure.

Bevorzugte aromatische Dicarbonsäuren sind Terephthalsäure, Isophthalsäure und 2,6-Naphthalindicarbonsäure, insbesondere Terephthalsäure und Isophthalsäure.

Bevorzugte Diole sind Ethylenglykol, Butylenglykol und Neopentylglykol.

Im Allgemeinen beinhaltet der Polyester die folgenden Dicarboxylate und Alkylene, jeweils bezogen auf die Gesamtdicarboxylat- bzw. Gesamtalkylenmenge:

12 bis 89 Mol-%, bevorzugt 25 bis 79 Mol-% und besonders bevorzugt 30 bis 72 Mol-% Terephthalat;

0 bis 25 Mol-%, bevorzugt 5 bis 20 Mol-% und besonders bevorzugt 10 bis 20 Mol-% Isophthalat;

11 bis 88 Mol -%, bevorzugt 16 bis 70 Mol-% und besonders bevorzugt 17 bis 58 Mol-% Azelat;

0 bis 50 Mol-%, bevorzugt 0 bis 40 Mol-% und besonders bevorzugt 0,2 bis 30 Mol-% Sebazat;

0 bis 50 Mol-%, bevorzugt 0 bis 40 Mol-% und besonders bevorzugt 0 bis 30 Mol-% Adipat;

mehr als 30 Mol -%, bevorzugt mehr als 40 Mol-% und besonders bevorzugt mehr als 50 Mol-% Ethylen oder Butylen.

Bis zu 10 Gew.-% des Materials der Deckschicht(A) besteht aus weiteren Additiven, Hilfsmitteln und/oder sonstigen in der Polyesterfolientechnologie üblicherweise verwendeten Zusatzstoffen.

In einer günstigen Ausführungsform enthält darüber hinaus das Material der Deckschicht (A) zu 2 bis 18 Gew.-%, bevorzugt 5 bis 17 Gew.-% und besonders bevorzugt 7 bis 16 Gew.-% ein Polymer, welches mit Polyester unverträglich ist (anti-PET-Polymer).

Es hat sich als zweckmäßig erwiesen, den Hauptpolyester der Deckschicht (A) aus zwei getrennten Polyestern I und II herzustellen, die dem Extruder für diese Schicht als Mischung zugeführt werden.

Die heißsiegelbare und peelfähige Deckschicht (A) zeichnet sich durch charakteristische Merkmale aus. Sie besitzt eine Siegelanspringtemperatur (= Mindestsiegeltemperatur) gegenüber APET/CPET und CPET-Menüschalen von nicht mehr als 165 °C, besonders nicht mehr als 160 °C und besonders bevorzugt nicht mehr als 155 °C und eine Peelkraft gegenüber APET/CPET und CPET Menüschalen von mindestens 1,5 N, bevorzugt mindestens 2,0 N, besonders bevorzugt mindestens 2,5 N (immer bezogen auf 15 mm Folienbreite). Die heißsiegelbare und peelfähige Deckschicht (A) hat gegenüber APET/CPET und CPET-Menüschalen eine max. Siegeltemperatur von im Allgemeinen 220 °C, bevorzugt 200 °C und besonders bevorzugt 190 °C, wobei im gesamten Siegelbereich eine gegenüber APET/CPET und CPET-Menüschalen peelfähige Folie erhalten wird. D. h. mit dieser Folie wird beim 180°-Zugversuch gemäß Figur 2 eine Kurve gemäß Figur 3b erhalten. Der Begriff Menüschalen ist gleichzusetzen mit Materialien allgemein.

Für die bevorzugten, oben angegebenen Bereiche lassen sich die Peelergebnisse auch zahlenmäßig beschreiben. Entsprechend den vorliegenden experimentellen Untersuchungen können die Peelergebnisse einfach durch folgenden Zusammenhang zwischen der Siegeltemperatur (T = δ in °C) und der Peelkraft (in N/15 mm) miteinander korreliert werden

$$0{,}02 \cdot \vartheta \, / \, {}^\circ C - 0{,}8 \leq \textit{Peelkraft} F / N \textit{ je } 15 \textit{ mm} \leq 0{,}033 \cdot \vartheta \, / \, {}^\circ C + 1{,}4$$

Dieser Zusammenhang ist graphisch zur Veranschaulichung in Figur 5 dargestellt.

Erfindungsgemäß zeichnet sich die Folie für eine selbsttätige Entlüftung durch einen erhöhten Schrumpf zumindest in einer Richtung aus. Erfindungsgemäß beträgt der Schrumpf in dieser Richtung bevorzugt mehr als 5 %, gemessen bei 100 °C Umlufttemperatur und einer Dauer von 15 min (vgl. Messmethoden). In der bevorzugten Ausführungsform beträgt der Schrumpf in dieser Richtung mehr als 8 % und in der besonders bevorzugten Ausführungsform beträgt der Schrumpf in dieser Richtung mehr als 10 %. Als bevorzugte Schrumpfrichtung wird die Richtung quer zur Folienbahnrichtung angegeben (= TD-Richtung). Darüber hinaus kann die Folie in gleicher Weise auch in MD-Richtung (= Folienbahnrichtung) diesen Schrumpf aufweisen. Schrumpft die Folie in beiden Richtungen, so ist für eine selbsttätige Entlüftung ein Höchstschrumpf in beiden Richtungen von 20 % vollkommen ausreichend. Schrumpft die Folie dagegen nur in die bevorzugte Richtung, so sollte der Höchstschrumpf nach Möglichkeit 30 % (gemessen bei 100 °C Umlufttemperatur und einer Dauer von 15 min) nicht übersteigen, da ansonsten bereits bei der Heißsiegelung der Folie auf die Menüschale Probleme auftreten können.

Die Folie nach der vorliegenden Erfindung weist eine Basisschicht (B) und mindestens eine erfindungsgemäße Deckschicht (A) auf. In diesem Fall ist die Folie zweischichtig aufgebaut. In einer bevorzugten Ausführungsform ist die Folie drei - oder mehr als dreischichtig aufgebaut. Im Falle der besonders bevorzugten dreischichtigen Ausführungsform besteht sie dann aus der Basisschicht (B), der erfindungsgemäßen Deckschicht (A) und einer der Deckschicht (A) gegenüberliegenden Deckschicht (C); Folienaufbau A-B-C. Bei einer vierschichtigen Ausführungsform enthält die Folie eine Zwischenschicht (D) zwischen der Basisschicht (B) und der Deckschicht (A) oder (C).

Die Basisschicht der Folie besteht bevorzugt zu mindestens 80 Gew.-% aus thermoplastischem Polyester, bezogen auf das Gewicht der Basisschicht (B). Dafür geeignet sind z. B. Polyester aus Ethylenglykol und Terephthalsäure (= Polyethylenterephthalat, PET), aus Ethylenglykol und Naphthalin-2,6-dicarbonsäure (= Polyethylen-2,6-naphthalat, PEN), aus 1,4-Bis-hydroxymethyl-cyclohexan und Terephthalsäure (= Poly-1,4-cyclohexandimethylenterephthalat, PCDT) sowie aus Ethylenglykol, Naphthalin-2,6-dicarbonsäure und Biphenyl-4,4'-dicarbonsäure (= Polyethylen-2,6-naphthalatbibenzoat, PENBB). Bevorzugt sind Ethyleneinheiten enthaltende Polyester, die - bezogen auf die Dicarboxylateinheiten - aus mindestens 90 Mol-%, besonders bevorzugt mindestens 95 Mol-%, Terephthalat- oder 2,6-Naphthalat-Einheiten bestehen. Die restlichen Monomereinheiten stammen aus anderen Dicarbonsäuren bzw. Diolen. In vorteilhafter Weise können für die Basisschicht (B) auch Copolymere oder Mischungen oder Blends aus den genannten Homo- und/oder Copolymeren verwendet werden. Bei der Angabe der Mengen für die Dicarbonsäuren bildet die Gesamtmenge aller Dicarbonsäuren 100 Mol-%. Analog bildet die Gesamtmenge aller Diole auch 100 Mol-%.

Geeignete andere aromatische Dicarbonsäuren sind bevorzugt Benzoldicarbonsäuren, Naphthalindicarbonsäuren (beispielsweise Naphthalin-1,4- oder 1,6-dicarbonsäure), Biphenyl-x,x'-dicarbonsäuren (insbesondere Biphenyl-4,4'-dicarbonsäure), Diphenylacetylen-x,x'-dicarbonsäuren (insbesondere Diphenylacetylen-4,4'-dicarbonsäure) oder Stilben-x,x'-dicarbonsäuren. Von den cycloaliphatischen Dicarbonsäuren sind Cyclohexandicarbonsäuren (insbesondere Cyclohexan-1,4-dicarbonsäure) zu nennen. Von den aliphatischen Dicarbonsäuren sind die ($C_3$-$C_{19}$) Alkandisäuren besonders geeignet, wobei der Alkanteil geradkettig oder verzweigt sein kann.

Geeignete andere aliphatische Diole sind beispielsweise Diethylenglykol, Triethylenglykol, aliphatische Glykole der allgemeinen Formel $HO\text{-}(CH_2)_n\text{-}OH$, wobei n eine ganze Zahl von 3 bis 6 darstellt (insbesondere Propan-1,3-diol, Butan-1,4-diol, Pentan-1,5-diol und Hexan-1,6-diol) oder verzweigte aliphatische Glykole mit bis zu 6 KohlenstoffAtomen, cycloaliphatische, gegebenenfalls heteroatomhaltige Diole mit einem oder mehreren Ringen. Von den cycloaliphatischen Diolen sind Cyclohexandiole (insbesondere Cyclohexan-1,4-diol) zu nennen. Geeignete andere aromatische Diole entsprechen beispielsweise der Formel $HO\text{-}C_6H_4\text{-}X\text{-}C_6H_4\text{-}OH$, wobei X für $\text{-}CH_2\text{-}$, $\text{-}C(CH_3)_2\text{-}$, $\text{-}C(CF_3)_2\text{-}$, $\text{-}O\text{-}$, $\text{-}S\text{-}$ oder $\text{-}SO_2\text{-}$ steht. Daneben sind auch Bisphenole der Formel $HO\text{-}C_6H_4\text{-}C_6H_4\text{-}OH$ gut geeignet.

Besonders vorteilhaft ist es, wenn in der Basisschicht (B) ein Polyester-Copolymer auf Basis von Terephthalat und bestimmten Mengen (bevorzugt < 20 Mol-%) Isophthalsäure oder auf Basis von Terephthalat und bestimmten Mengen (bevorzugt < 50 Mol-%) Naphthalin-2,6-dicarbonsäure verwendet wird. In diesem Fall ist die Herstellbarkeit der Folie besonders gut. Die Basisschicht (B) enthält dann im Wesentlichen ein Polyestercopolymeres, das überwiegend aus Terephthalsäure und Isophthalsäure - Einheiten und/oder Terephthalsäure- und Naphthalin-2,6-dicarbonsäure-Einheiten und aus Ethylenglykol-Einheiten zusammengesetzt ist. Die besonders bevorzugten Copolyester, die die gewünschten Eigenschaften der Folie bereitstellen, sind solche, die aus Terephthalat- und Isophthalat-Einheiten und aus Ethylenglykol-Einheiten aufgebaut sind.

Die Herstellung der Polyester kann z. B. nach dem Umesterungsverfahren erfolgen. Dabei geht man von Dicarbonsäureestern und Diolen aus, die mit den üblichen Umesterungskatalysatoren, wie Zink-, Calcium-, Lithium- und Mangan-Salzen, umgesetzt werden. Die Zwischenprodukte werden dann in Gegenwart allgemein üblicher Polykondensationskatalysatoren, wie Antimontrioxid, Titanoxide oder Ester sowie Germanium-Verbindungen, polykondensiert. Die Herstellung kann ebenso gut nach dem Direktveresterungsverfahren in Gegenwart von Polykondensationskatalysatoren erfolgen. Dabei geht man direkt von den Dicarbonsäuren und den Diolen aus.

In einer weiteren Ausführungsform enthält die Basisschicht (B) und/oder ggf. eine andere zusätzliche Schicht mindestens ein Weißpigment und optional einen optischen Aufheller.

Zur Erzielung des gewünschten Weißgrades und der gewünschten niedrigen Transparenz (Lichttransmission) enthält die Basisschicht (B) dann ein anorganisches Weißpigment oder ein mit Polyester weitgehend unverträgliches Polymer oder eine Kombination aus beiden. Als anorganische Weißpigmente kommen z. B. Titandioxid, Calciumcarbonat, Bariumsulfat, Zinksulfid oder Zinkoxid in Frage. Um zu dem gewünschten Weißgrad (bevorzugt > 60) und zu der gewünschten niedrigen Transparenz (bevorzugt < 60 %) zu gelangen, sollte die Basisschicht (B) in diesem Fall hochgefüllt sein.

In einer bevorzugten Ausführungsform wird Titandioxid (TiO$_2$) als alleiniges einfärbendes Pigment verwendet. Es wird bevorzugt als Extrusionsmasterbatch (die Titandioxid-Konzentration ist hier deutlich höher als in der biaxial orientierten Folie) dem Originalrohstoff zugegeben. Typische Werte für die TiO$_2$-Konzentration im Extrusionsmasterbatch sind 50 Gew.-% Titandioxid. Das Titandioxid kann sowohl vom Rutil-Typ als auch vom Anatas-Typ sein. Vorzugsweise wird Titandioxid vom Rutil-Typ verwendet. Die Korngröße des Titandioxids liegt in der Regel zwischen 0,05 und 0,5 μm, bevorzugt zwischen 0,1 und 0,3 μm. Die Folie erhält durch die eingearbeiteten TiO$_2$-Pigmente in der Basisschicht (B) ein brillantes weißes Aussehen. Die TiO$_2$-Konzentration zur Erzielung des gewünschten Weißgrades ( > 60) und der gewünschten niedrigen Transparenz ( < 60 %) liegt in der Regel bei über 3 Gew.-%, jedoch unterhalb von 20 Gew.-%, vorzugsweise über 4 Gew.-%, jedoch unterhalb 18 Gew.-% und ganz besonders bevorzugt oberhalb 5 Gew.-%, jedoch unterhalb 16 Gew.-%, bezogen auf das Gesamtgewicht der Basisschicht (B).

In einer weiteren bevorzugten Ausführungsform enthält die Basisschicht (B) dann mindestens Bariumsulfat als Pigment. Die Bariumsulfat Konzentration zur Erzielung des gewünschten Weißgrades ( > 60) und der gewünschten niedrigen Transparenz ( < 60 %) beträgt in der Regel 0,2 bis 40 Gew.-%, vorzugsweise 0,5 bis 30 Gew.-%, besonders bevorzugt 1 bis 25 Gew.-%, bezogen auf das Gewicht von (B) (s.o.). Die mittlere Teilchengröße des Bariumsulfats ist relativ klein und liegt vorzugsweise im Bereich von 0,1 bis 5 μm, besonders bevorzugt im Bereich von 0,2 bis 3 μm (Sedigraphmethode). Die Dichte des verwendeten Bariumsulfates liegt bevorzugt zwischen 4 und 5 g/cm$^3$. Vorzugsweise wird das Bariumsulfat als Extrusionsmasterbatch bei der Folienherstellung dem Thermoplasten zudosiert. In einer bevorzugten Ausführungsform werden gefällte Bariumsulfat-Typen eingesetzt. Gefälltes Bariumsulfat wird aus Bariumsalzen und Sulfaten oder Schwefelsäure als feinteiliges farbloses Pulver, dessen Korngröße durch die Fällungsbedingungen zu steuern ist, erhalten. Gefällte Bariumsulfate können nach den üblichen Verfahren, die in Kunststoff-Journal 8, Nr. 10, 30-36 und Nr. 11, 31-36 (1974) beschrieben sind, hergestellt werden. In einer besonders bevorzugten Ausführungsform enthält die Basisschicht der erfindungsgemäßen Folie als Hauptbestandteil ein kristallisierbares Polyethylenterephthalat sowie 1 bis 25 Gew.-% gefälltes Bariumsulfat, zweckmäßigerweise mit einem Teilchendurchmesser von 0,4 bis 1 μm, wobei ®Blanc fixe XR-HX oder Blanc fixe HXH von der Firma Sachtleben Chemie, Deutschland, besonders bevorzugt wird.

Zu einer weiteren Steigerung des Weißgrades können geeignete optische Aufheller der Basisschicht (B) zugesetzt werden, wobei der optische Aufheller in Mengen im Bereich von 10 bis 50.000 ppm, insbesondere von 20 bis 30.000 ppm, besonders bevorzugt von 50 bis 25.000 ppm, bezogen auf das Gewicht (B), eingesetzt wird. Vorzugsweise wird auch der optische Aufheller als Extrusionsmasterbatch bei der Folienherstellung dem Thermoplasten zudosiert. Die erfindungsgemäßen optischen Aufheller sind in der Lage, UV-Strahlen im Bereich von 360 bis 380 nm zu absorbieren und als längerwelliges, sichtbares blauviolettes Licht wieder abzugeben. Geeignete optische Aufheller sind z. B. Bis-benzoxazole, Phenylcumarine und Bis-sterylbiphenyle, insbesondere Phenylcumarin, besonders bevorzugt sind Triazin-phenylcumarin, die unter der Produktbezeichnung ®Tinopal bei Ciba-Geigy, Basel, Schweiz, erhältlich sind, oder ®Hostalux KS (Clariant, Deutschland) sowie ®Eastobrite OB-1 (Eastman).

Sofern zweckmäßig können neben dem optischen Aufheller auch noch in Polyester lösliche blaue Farbstoffe der Basisschicht (B) zugesetzt werden. Als geeignete blaue Farbstoffe haben sich z. B. Kobaltblau, Ultramarinblau und Anthrachinonfarbstoffe, insbesondere Sudanblau 2 (BASF, Ludwigshafen, Bundesrepublik Deutschland), erwiesen. Die blauen Farbstoffe werden in Mengen von 10 bis 10.000 ppm, insbesondere 20 bis 5.000 ppm, besonders bevorzugt 50 bis 1.000 ppm, bezogen auf das Gewicht des kristallisierbaren Thermoplasten, eingesetzt.

Erfindungsgemäß können Titandioxid oder das Bariumsulfat, der optische Aufheller und gegebenenfalls der blaue Farbstoff bereits beim Thermoplast-Rohstoffhersteller zudosiert werden oder bei der Folienherstellung über Masterbatch-Technologie in den Extruder z. B. für die Schicht (B) dosiert werden. Besonders bevorzugt ist die Zugabe des Titandioxids oder des Bariumsulfats, des optischen Aufhellers und gegebenenfalls des blauen Farbstoffes über die Masterbatch-Technologie. Die Additive werden bevorzugt in einem festen Trägermaterial voll dispergiert. Als Trägermaterialien kommen der Thermoplast selbst, wie z. B. das Polyethylenterephthalat oder auch andere Kunststoffe, die mit dem Thermoplasten ausreichend verträglich sind, in Frage. Vorteilhaft ist, wenn die Korngröße und das Schüttgewicht des/der Extrusionsmasterbatches ähnlich der Korngröße und dem Schüttgewicht des Thermoplasten sind, so dass eine homogene Verteilung und damit eine homogener Weißgrad und somit eine homogene Transparenz erreicht werden.

In einer weiteren günstigen Ausführungsform enthält die Basisschicht (B) zur Erzielung des gewünschten Weißgrades und der gewünschten niedrigen Transparenz ein mit Polyester unverträgliches Polymer (anti-PET-Polymer). Die bevorzugten Konzentrationen von anti-PET-Polymer in (B) betragen 4 bis 50 Gew.-%.

Beispiele für geeignete unverträgliche Polymere (anti-PET-Polymer) sind Polymere auf Basis von Ethylen (z.

B. LLDPE, HDPE), Propylen (PP), Cycloolefinen (CO), Amiden (PA) oder Styrol (PS). In einer bevorzugten Ausführungsform wird als polyesterunverträgliches Polymer (anti-PET-Polymer) ein Copolymeres verwendet. Beispiele hierfür sind Copolymere auf Basis von Ethylen (C2/C3, C2/C3/C4- Copolymere), Propylen (C2/C3, C2/C3/C4- Copolymere), Butylen (C2/C3, C2/C3/C4- Copolymere) oder auf Basis von Cycloolefinen (Norbornen/Ethylen-, Tetracyclododecen/ Ethylen-Copolymere). In einer der besonders bevorzugten Ausführungsformen ist das mit Polyester unverträgliche Polymer (anti-PET-Polymer) ein Cycloolefincopolymer (COC). Solche Cycloolefincopolymere sind beispielsweise in der EP-A-1 068 949 oder in der JP 05-009319 beschrieben, auf die hier Bezug genommen wird.

Unter den Cycloolefincopolymeren sind insbesondere diejenigen bevorzugt, die polymerisierte Einheiten polycyclischer Olefine mit Norbornengrundstruktur, besonders bevorzugt Norbornen oder Tetracyclododecen, enthalten. Besonders bevorzugt sind Cycloolefincopolymere (COC), die polymerisierte Einheiten acyclischer Olefine, insbesondere Ethylen, enthalten. Ganz besonders bevorzugt sind Norbonen/Ethylen- und Tetracyclododecen/Ethylen-Copolymere, welche 5 bis 80 Gew.-% Ethylen-Einheiten, vorzugsweise 10 bis 60 Gew.-% Ethylen-Einheiten enthalten (bezogen auf die Masse des Copolymeren).

Die Cycloolefinpolymere weisen im Allgemeinen Glasübergangstemperaturen zwischen -20 und 400 °C auf. Zur Erzielung einer weißen Basisschicht (B) mit niedriger Transparenz sind solche Cycloolefincopolymere (COC) besonders geeignet, die eine Glasübergangstemperatur $T_g$ von größer als 70 °C, vorzugsweise größer als 90 °C und insbesondere größer als 110 °C aufweisen. Die Viskositätszahl (Dekalin, 135 °C, DIN 53 728) liegt zweckmäßig zwischen 0,1 und 200 ml/g, bevorzugt zwischen 50 und 150 ml/g. Die Glasübergangstemperatur wird zweckmäßiger Weise so gewählt, dass die COCs Vakuolen induzierend wirken.

Die Herstellung der Cycloolefincopolymere (COC) geschieht z. B. durch eine heterogene oder homogene Katalyse mit metallorganischen Verbindungen und ist in einer Vielzahl von Dokumenten beschrieben. Geeignete Katalysatorsysteme, basierend auf Mischkatalysatoren aus Titan- bzw. Vanadiumverbindungen in Verbindung mit Aluminiumorganylen, werden in der DD 109 224, DD 237 070 und der EP-A-0 156 464 beschrieben.

EP-A-0 283 164, EP-A-0 407 870, EP-A-0 485 893 und EP-A-0 503 422 beschreiben die Herstellung von Cycloolefincopolymeren (COC) mit Katalysatoren, basierend auf löslichen Metallocenkomplexen. Auf Cycloolefincopolymere, hergestellt mit Katalysatoren, die auf löslichen Metallocenkomplexen basieren, wird besonders bevorzugt zurückgegriffen. Solche COC sind käuflich erhältlich; z. B. Topas® (Ticona, Frankfurt).

Zur Erzielung des gewünschten Weißgrades ( > 60) und der gewünschten niedrigen Transparenz (< 60 %) enthält die Basisschicht (B) in der bevorzugten Ausführungsform ein Cycloolefincopolymer (COC) in einer Menge von minimal 2 Gew.-%, bevorzugt 4 bis 50 Gew.-% und besonders bevorzugt 6 bis 40 Gew.-%, bezogen auf das Gewicht der Basisschicht (B). Für die bevorzugte Ausführungsform der vorliegenden Erfindung ist es wesentlich, dass das Cycloolefincopolymer (COC) mit dem Polyester nicht verträglich ist und mit diesem keine homogene Mischung bildet. Das COC wird entweder als reines Granulat oder als granuliertes Konzentrat (Masterbatch) in die Basisschicht eingearbeitet, indem das Polyestergranulat oder -pulver mit dem COC bzw. dem COC-Masterbatch vorgemischt und anschließend dem Extruder zugeführt wird. Im Extruder werden die Komponenten weiter vermischt und auf Verarbeitungstemperatur erwärmt. Dabei ist es zweckmäßig, dass die Extrusionstemperatur oberhalb der Glasübergangstemperatur $T_g$ des COCs liegt, im allgemeinen mindestens 5 K, vorzugsweise 10 bis 180 K, insbesondere 15 bis 150 K, über der Glasübergangstemperatur $T_g$ des Cycloolefincopolymeren (COC).

In einer anderen bevorzugten Ausführungsform kann die Basisschicht (B) der Folie zur Verbesserung des Weißgrades und Reduzierung der Transparenz eine Kombination aus mindestens einem Weißpigment, einem mit Polyester weitgehend unverträglichen Polymer (anti-PET-Polymer) und optional einem optischen Aufheller enthalten. Besonders bevorzugt werden Weißgrad und Transparenz der Basisschicht (B) hierbei optimiert durch eine Kombination aus Titandioxid oder Bariumsulfat und einem Cycloolefincopolymer (COC), wobei das Cycloolefincopolymer (COC) eine Glasübergangstemperatur $T_g$ von größer als 70 °C, vorzugsweise größer als 90 °C und insbesondere größer als 110 °C aufweist.

Die Folie nach der vorliegenden Erfindung ist zu mindest zweischichtig aufgebaut. Sie besteht dann aus der Basisschicht (B) und der auf dieser durch Coextrusion aufgebrachten erfindungsgemäßen siegelbaren und peelfähigen Deckschicht (A).

Die durch Coextrusion auf die Basisschicht (B) aufgebrachte siegelbare und peelfähige Deckschicht (A) ist überwiegend, d. h. bevorzugt zu mindestens 80 Gew.-% aus Polyestern aufgebaut.

Erfindungsgemäß enthält die heißsiegelbare und peelfähige Deckschicht (A) Polyester auf Basis von aromatischen und aliphatischen Säuren und bevorzugt aliphatischen Diolen. Des Weiteren enthält die Deckschicht (A) anorganische und/oder organische Partikel in einer Konzentration von bevorzugt 2 bis 10 Gew.-%.

Unter den Polyestern werden in der bevorzugten Ausführungsform Copolyester oder Blends aus Homo- und Copolyestern oder Blends aus verschiedenen Copolyestern verstanden, die auf Basis von aromatischen und aliphatischen Dicarbonsäuren und aliphatischen Diolen aufgebaut sind.

Beispiele für die erfindungsgemäß einsetzbaren aromatischen Dicarbonsäuren sind die Terephthalsäure, die Isophthalsäure, die Phthalsäure und die 2,6 Naphthalindicarbonsäure.

Beispiele für die erfindungsgemäß einsetzbaren aliphatischen Dicarbonsäuren sind die Bernsteinsäure, die Glutarsäure, die Adipinsäure, die Pimelinsäure, die Korksäure, die Azelainsäure und die Sebazinsäure.

Beispiele für die erfindungsgemäß einsetzbaren aliphatischen Diole sind Ethylenglykol, 1,3-Propandiol, 1,3-Butandiol, 1,4-Butandiol, 1,5-Pentandiol, 2,2-Dimethyl-1,3-Propandiol, Diethylenglycol, Triethylenglycol und 1,4-Cyclohexandimethanol.

Der Polyester für die Deckschicht (A) wird bevorzugt aus zwei Polyestern I und II hergestellt.

Der Anteil des Polyesters I, der aus einem oder mehreren aromatischen Dicarboxylaten und einem oder mehreren aliphatischen Alkylenen besteht, in der Deckschicht (A) beträgt bevorzugt 0 bis 50 Gew.-%. In der bevorzugten Ausführungsform beträgt der Anteil des Polyesters I 5 bis 45 Gew.-% und in der besonders bevorzugten Ausführungsform beträgt er 10 bis 40 Gew.-%.

Im Allgemeinen basiert der Polyester I der erfindungsgemäßen Deckschicht (A) auf den folgenden Dicarboxylaten und Alkylenen, jeweils bezogen auf die Gesamtdicarboxylat- bzw. Gesamtalkylenmenge:

70 bis 100 Mol-%, bevorzugt 72 bis 95 Mol-% und besonders bevorzugt 74 bis 93 Mol-% Terephthalat;

0 bis 30 Mol-%, bevorzugt 5 bis 28 Mol-% und besonders bevorzugt 7 bis 26 Mol-% Isophthalat;

mehr als 50 Mol-%, bevorzugt mehr als 65 Mol-% und besonders bevorzugt mehr als 80 Mol-% Ethyleneinheiten.

Eventuell vorhandene restliche Anteile stammen von anderen aromatischen Dicarbonsäuren und anderen aliphatischen Diolen, wie sie bereits zuvor für die Basisschicht (B) aufgelistet worden sind.

Ganz besonders bevorzugt sind solche Copolyester, bei denen der Anteil an Terephthalat-Einheiten 74 bis 88 Mol-%, der entsprechende Anteil an Isophthalat-Einheiten 12 bis 26 Mol-% (wobei die Dicarboxylatanteile sich zu 100 Mol-% ergänzen) und der Anteil an Ethyleneinheiten 100 Mol-% beträgt. D. h. es handelt sich um Polyethylenterephthalat/isophthalat.

In einer weiteren bevorzugten Ausführungsform besteht der Polyester I aus einer Mischung, welche einen Copolyester, aufgebaut aus Terephthalat-, Isophthalat- und aus Ethylen-Einheiten, und ein aromatisches Polyesterhomopolymeres, z. B. ein Polybutylenterephthalat, enthält.

Entsprechend der vorliegenden Erfindung beträgt der Anteil von Polyester II in der Deckschicht (A) bevorzugt 50 bis 100 Gew.-%. In der bevorzugten Ausführungsform beträgt der Anteil von Polyester II 55 bis 95 Gew.-% und in der besonders bevorzugten Ausführungsform beträgt er 60 bis 90 Gew.-%.

Bevorzugt besteht der Polyester II aus einem Copolymeren aus aliphatischen und aromatischen Säurekomponenten, bei welchem die aliphatischen Säurekomponenten bevorzugt 20 bis 90 Mol-%, insbesondere 30 bis 70 Mol-% und besonders bevorzugt 35 bis 60 Mol-% betragen, bezogen auf die Gesamtsäuremenge des Polyesters II. Der zu 100 Mol-% fehlende Dicarboxylatanteil stammt von aromatischen Säuren, bevorzugt der Terephthalsäure und/oder der Isophthalsäure sowie auf der glykolischen Seite von aliphatischen oder cycloaliphatischen oder aromatischen Diolen, wie sie bereits oben bezüglich der Basisschicht ausführlich beschrieben wurden.

Im Allgemeinen basiert der Polyester II der erfindungsgemäßen Deckschicht (A) bevorzugt zumindest auf den folgenden Dicarboxylaten und Alkylenen, jeweils bezogen auf die Gesamtdicarboxylat- bzw. Gesamtalkylenmenge:

20 bis 90 Mol -%, bevorzugt 30 bis 65 Mol-% und besonders bevorzugt 35 bis 60 Mol-% Azelat;
0 bis 50 Mol-%, bevorzugt 0 bis 45 Mol-% und besonders bevorzugt 0 bis 40 Mol-% Sebazat;
0 bis 50 Mol-%, bevorzugt 0 bis 45 Mol-% und besonders bevorzugt 0 bis 40 Mol-% Adipat;
10 bis 80 Mol-%, bevorzugt 20 bis 70 Mol-% und besonders bevorzugt 30 bis 60 Mol-% Terephthalat;
0 bis 30 Mol-%, bevorzugt 3 bis 25 Mol-% und besonders bevorzugt 5 bis 20 Mol-% Isophthalat;

mehr als 30 Mol-%, bevorzugt mehr als 40 Mol-% und besonders bevorzugt mehr als 50 Mol-% Ethylen oder Butylen.

Eventuell vorhandene restliche Anteile stammen von anderen aromatischen Dicarbonsäuren und anderen aliphatischen Diolen, wie sie bereits zuvor für die Basisschicht (B) aufgelistet worden sind, oder auch von Hydroxycarbonsäuren wie Hydroxybenzoesäure o. ä.

Durch das Vorhandensein von bevorzugt mindestens 10 Mol-% aromatischer Dicarbonsäure wird gewährleistet, dass das Polymer II ohne Verklebungen z. B. im Coextruder oder in der Längsstreckung verarbeitbar ist.

Bevorzugt enthält die Deckschicht (A) eine Mischung aus den Polyestern I und II. Gegenüber der Verwendung von nur einem Polyester mit vergleichbaren Komponenten und vergleichbaren Anteilen der Komponenten weist eine Mischung die folgenden Vorteile auf:
Die Mischung der beiden Polyester I und II ist von den jeweiligen Glasübergangstemperaturen ($T_g$) gesehen leichter zu verarbeiten (zu extrudieren). Wie Untersuchungen gezeigt haben, neigt die Mischung aus einem Polymeren mit einem hohen $T_g$ (Polyester I) und einem Polymeren mit einer niedrigen $T_g$ (Polyester II) weniger zum Verkleben im Einzug des Coextruders als ein einziges Polymer mit einer entsprechend gemischten $T_g$.

Die Polymerherstellung ist einfacher, weil man in der Regel nicht beliebig viele Dosierstationen für die Ausgangsstoffe zur Verfügung hat.

Außerdem können mit der Mischung praktisch gesehen die gewünschten Peeleigenschaften individueller eingestellt werden als bei Einsatz eines einzigen Polyesters.

Auch die Zugabe von Partikeln (siehe unten) gestaltet sich bei Polyester I einfacher als bei Polyester II.

Zweckmäßigerweise beträgt die Glasübergangstemperatur von Polyester I mehr als 50 °C. Bevorzugt beträgt die Glasübergangstemperatur von Polyester I mehr als 55 °C und besonders bevorzugt mehr als 60 °C. Ist die Glasübergangstemperatur von Polyester I kleiner als 50 °C, kann die Folie unter Umständen nicht verfahrenssicher hergestellt werden. Die Klebeneigung der Deckschicht (A) z. B. gegenüber Walzen kann dabei so groß sein, dass mit häufigen Folienabrissen, insbesondere in der Längsstreckung gerechnet werden muss. Die Folie kann sich dabei um die Walzen in der Längsstreckung wickeln, was zu beträchtlichen Schäden an der Maschine führen kann. Bei der Extrusion verklebt ein solcher Polyester leicht an den metallischen Wänden und führt damit zu Verstopfungen.

Zweckmäßigerweise beträgt die Glasübergangstemperatur von Polyester II weniger als 20 °C. Bevorzugt beträgt die Glasübergangstemperatur weniger als 15 °C und besonders bevorzugt weniger als 10 °C. Ist die Glasübergangstemperaturvon Polyester II größer als 20 °C, so neigt die Folie beim Abziehen von der Menüschale vermehrt zum Einreißen oder zum Abreißen, was unerwünscht ist.

In einer bevorzugten Ausführungsform enthält die heißsiegelbare und peelfähige Deckschicht (A) darüber hinaus ein mit Polyester unverträgliches Polymer (anti-PET-Polymer). Entsprechend der vorliegenden Erfindung beträgt der Anteil des polyesterunverträglichen Polymeren (anti-PET-Polymer) bevorzugt 2 bis 18 Gew.-%, bezogen auf die Masse der Deckschicht (A). In einer bevorzugten Ausführungsform beträgt der Anteil des Polymeren 5 bis 17 Gew.-% und in der besonders bevorzugten Ausführungsform beträgt er 7 bis 16 Gew.-%, ebenfalls bezogen auf die Masse der Deckschicht (A).

Beispiele für geeignete unverträgliche Polymere wurden bereits oben für die Basisschicht (B) beschrieben. In einer der besonders bevorzugten Ausführungsformen ist das mit Polyester unverträgliche Polymer ein Cycloolefincopolymer (COC). Wie schon für die Basisschicht (B) beschrieben, sind auch hier Norbonen/Ethylen- und Tetracyclododecen/Ethylen-Copolymere, welche 5 bis 80 Gew.-% Ethylen-Einheiten, vorzugsweise 10 bis 60 Gew.-% Ethylen-Einheiten enthalten (bezogen auf die Masse des Copolymeren) ganz besonders bevorzugt.

Die Cycloolefinpolymere weisen im Allgemeinen Glasübergangstemperaturen zwischen -20 und 400 °C auf. Zur Verbesserung der Peeleigenschaften der Deckschicht (A) sind solche Cycloolefincopolymerisate (COC) besonders geeignet, die eine Glasübergangstemperatur von kleiner als 160 °C, bevorzugt kleiner als 120 °C und besonders bevorzugt kleiner als 80 °C aufweisen. Vorzugsweise sollte die Glasübergangstemperatur oberhalb von 50 °C liegen, bevorzugt oberhalb von 55 °C, insbesondere oberhalb von 60 °C. Die Viskositätszahl (Dekalin, 135 °C, DIN 53 728) liegt zweckmäßigerweise zwischen 0,1 und 200 ml/g, bevorzugt zwischen 50 und 150 ml/g.

Auch für die peelfähige Deckschicht (A) wird besonders bevorzugt auf Cycloolefincopolymere, hergestellt mit Katalysatoren, die auf löslichen Metallocenkomplexen basieren, zurückgegriffen. Solche COC sind käuflich erhältlich; z. B. Topas® (Ticona, Frankfurt).

Erfindungsgemäß enthält die heißsiegelbare und peelfähige Deckschicht (A) anorganische und/oder organische Partikel. Entsprechend der vorliegenden Erfindung beträgt der Anteil der Partikel bevorzugt 2 bis 10 Gew.-%, bezogen auf die Masse der Deckschicht (A). In einer bevorzugten Ausführungsform beträgt der Anteil Partikel 2,5 bis 9 Gew.-% und in der besonders bevorzugten Ausführungsform beträgt er 3,0 bis 8 Gew.-%, ebenfalls bezogen auf die Masse der Deckschicht (A).

Enthält die Deckschicht (A) der Folie dagegen Partikel in einer Konzentration von weniger als 2 Gew.-%, so ist ein positiver Einfluss auf das Abziehverhalten der Folie von der Menüschale und ein positiver Einfluss auf eine selbsttätige Entlüftung in der Regel nicht gegeben, die Folie tendiert zum Ein- oder zum Abreißen. Enthält dagegen die Deckschicht (A) der Folie Partikel in einer Konzentration von mehr als 10 Gew.-%, so wird die Siegelung der Folie zu stark geschwächt.

Es hat sich als vorteilhaft erwiesen, wenn die Partikel in einer bestimmten Größe, in einer bestimmten Konzentration und in einer bestimmten Verteilung vorliegen. Daneben können auch Mischungen von zwei und mehreren verschiedenen Partikelsystemen oder Mischungen von Partikelsystemen in gleicher chemischer Zusammensetzung, aber unterschiedlicher Partikelgröße der Deckschicht (A) zugegeben werden.

Übliche Partikel (auch als "Pigmente" oder "Antiblockmittel" bezeichnet) sind anorganische und/oder organische Partikel, beispielsweise Calciumcarbonat, amorphe Kieselsäure, Talk, Magnesiumcarbonat, Bariumcarbonat, Calciumsulfat, Bariumsulfat, Lithiumphosphat, Calciumphosphat, Magnesiumphosphat, Aluminiumoxid, Lithiumfluorid, Calcium-, Barium-, Zink- oder Mangan-Salze der eingesetzten Dicarbonsäuren, Ruß, Titandioxid, Kaolin oder vernetzte Polystyrol- oder Acrylat-Partikel. Die Partikel können der Schicht in den jeweils vorteilhaften Konzentrationen, z. B. als glykolische Dispersion während der Polykondensation oder über Masterbatche bei der Extrusion, zugegeben werden.

Erfindungsgemäß bevorzugte Partikel sind synthetisch hergestellte, amorphe $SiO_2$-Partikel in kolloidaler Form. Diese Partikel werden hervorragend in die Polymermatrix eingebunden. Zur (synthetischen) Herstellung der

SiO$_2$-Partikel (auch Silikagel genannt) werden zunächst Schwefelsäure und Natriumsilikat unter kontrollierten Bedingungen zur Bildung von Hydrosol miteinander gemischt. Dieses formt sich schließlich zu einer harten, durchsichtigen Masse, die als Hydrogel bekannt ist. Nach Absonderung des als Nebenprodukt anfallenden Natriumsulfats durch ein Waschverfahren kann das Hydrogel getrocknet und weiterverarbeitet werden. Durch Kontrolle des Waschwasser-pH-Wertes und der Trocknungsbedingungen können die wichtigen physikalischen Parameter wie z. B. Porenvolumen, Porengröße und die Größe der Oberfläche des anfallenden Silikagels variiert werden. Die gewünschte Partikelgröße (z. B. den d$_{50}$-Wert) und die gewünschte Partikelgrößenverteilung (z. B. die SPAN98) erhält man durch geeignete Mahlung des Silikagels (z. B. mechanisch oder hydromechanisch). Solche Partikel können z. B. über die Firmen Grace, Fuji, Degussa oder Ineos bezogen werden.

Die Teilchen haben bevorzugt einen mittleren Partikeldurchmesser d$_{50}$ von 3,0 bis 12,0 µm, insbesondere von 3,5 bis 11,0 µm und besonders bevorzugt von 4,0 bis 10,0 µm. Bei der Verwendung von Teilchen mit einem Durchmesser, der unterhalb 3,0 µm liegt, ist ein positiver Einfluss der Partikel auf eine selbsttätige Entlüftung in der Regel nicht gegeben.

Bevorzugt ist in der heißsiegelbaren und peelfähigen Deckschicht (A) das Verhältnis aus Teilchengröße d$_{50}$ zur Schichtdicke d$_A$ der Deckschicht (A) $\geq$ 1,5. Insbesondere ist das Durchmesser/Schichtdicken-Verhältnis mindestens 1,7 und besonders bevorzugt mindestens 2,0. In diesen Fällen ist ein besonders positiver Einfluss der Partikel auf eine selbsttätige Entlüftung gegeben.

Es hat sich als besonders vorteilhaft erwiesen, in der heißsiegelbaren und peelfähigen Deckschicht (A) Partikel zu verwenden, deren Verteilung für den Partikeldurchmesser eine Streuung aufweist, die durch einen SPAN98 von $\leq$ 2,0 beschrieben wird (Definition des SPAN98, siehe Messvorschrift). Bevorzugt ist ein SPAN98 von $\leq$ 1,9 und besonders bevorzugt ist ein SPAN98 von $\leq$ 1,8. Enthält die Deckschicht (A) der Folie dagegen Partikel, deren SPAN98 größer als 2,0 ist, so werden die optischen Eigenschaften und die Siegeleigenschaften der Folie schlechter.

Weiterhin hat es sich für die Eignung als Folie mit selbsttätiger Entlüftung als vorteilhaft erwiesen, die Rauhigkeit der heißsiegelbaren und peelfähigen Deckschicht (A) so einzustellen, dass ihr R$_a$-Wert bevorzugt größer als 120 nm ist. Bevorzugt ist die Rauhigkeit R$_a$ größer als 160 nm und besonders bevorzugt ist sie größer als 200 nm; die Obergrenze der Rauhigkeit sollte 400 nm, bevorzugt 350 nm, insbesondere 300 nm, nicht überschreiten. Dies kann durch die Auswahl der Partikel/-Durchmesser, deren Konzentration und die Variation der Schichtdicke gesteuert werden.

In einer besonders vorteilhaften dreischichtigen Ausführungsform (ABC) besteht die Folie dann aus der Basisschicht (B), der erfindungsgemäßen Deckschicht (A) und einer der Deckschicht (A) gegenüberliegenden Deckschicht (C). Diese Deckschicht (C) kann aus den für die Basisschicht beschriebenen Polymeren bestehen. Zur Verbesserung der Wickelbarkeit enthält die Deckschicht (C) die, wie bereits für Deckschicht (A) beschrieben, üblichen Partikel (auch als "Antiblockmittel" bezeichnet). Die Partikel der Deckschicht (C) sollten einen mittleren Partikeldurchmesser d$_{50}$ (= Median) von bevorzugt 1,5 bis 6 µm aufweisen. Es hat sich dabei als besonders zweckmäßig erwiesen, Teilchen mit einem mittleren Partikeldurchmesser d$_{50}$ von 2,0 bis 5 µm und besonders bevorzugt von 2,5 bis 4 µm zu verwenden. Die Partikel der Deckschicht (C) sollten bevorzugt eine Streuung aufweisen, die durch einen SPAN98 von $\leq$ 2,0 beschrieben wird. Bevorzugt ist der SPAN98 $\leq$ 1,9 und besonders bevorzugt ist der SPAN98 $\leq$ 1,8. Die Partikel der Deckschicht (C) sollten in der Regel in einer Konzentration von 0,1 bis 0,5 Gew.-% vorhanden sein. Bevorzugt beträgt die Konzentration der Partikel 0,12 bis 0,4 Gew.-% und besonders bevorzugt 0,15 bis 0,3 Gew.-%.

Die Deckschicht (C) erhöht den Glanz der Folie und verhindert im Fall einer weißen Folie den Abrieb der hochgefüllten weißen Basisschicht (B). Der Glanz der Folienoberfläche (C) bei einer dreischichtigen Folie ist bevorzugt größer als 100 (gemessen nach DIN 67530 in Anlehnung an ASTM-D 523-78 und ISO 2813 mit Einstrahlwinkel 20°). In einer bevorzugten Ausführungsform beträgt der Glanz dieser Seite mehr als 110 und in einer besonders bevorzugten Ausführungsform mehr als 120. Diese Folienoberfläche eignet sich daher insbesondere für eine weitere funktionelle Beschichtung, für die Bedruckung oder für die Metallisierung.

Zwischen der Basisschicht und den Deckschichten kann sich gegebenenfalls noch eine Zwischenschicht befinden. Diese kann wiederum aus den für die Basisschicht beschriebenen Polymeren bestehen. In einer besonders bevorzugten Ausführungsform besteht die Zwischenschicht aus den für die Basisschicht verwendeten Polyestern. Die Zwischenschicht kann auch die unten beschriebenen üblichen Additive enthalten. Die Dicke der Zwischenschicht ist im Allgemeinen größer als 0,3 µm und liegt vorzugsweise im Bereich von 0,5 bis 15 µm, insbesondere im Bereich von 1,0 bis 10 µm, besonders bevorzugt im Bereich von 1,0 bis 5 µm.

Bei der zweischichtigen und der besonders vorteilhaften dreischichtigen Ausführungsform der erfindungsgemäßen Folie liegt die Dicke der Deckschicht (A) bevorzugt im Bereich von 0,7 bis 8,0 µm, insbesondere im Bereich von 1,0 bis 7,0 µm und besonders bevorzugt im Bereich von 1,3 bis 6,0 µm. Beträgt die Dicke der Deckschicht (A) mehr als 8,0 µm, so wächst die Peelkraft deutlich an und liegt nicht mehr im bevorzugten Bereich. Darüber hinaus wird das Peelverhalten der Folie beeinträchtigt. Beträgt die Dicke der Deckschicht (A) dagegen weniger als 0,7 µm, so hat die Folie in der Regel nicht mehr die gewünschten Peeleigenschaften.

Die Dicke der anderen, nicht siegelbaren Deckschicht (C) kann gleich der Deckschicht (A) sein oder von dieser verschieden; ihre Dicke liegt im Allgemeinen zwischen 0,5 und 5 μm.

Die Gesamtdicke der erfindungsgemäßen Polyesterfolie kann innerhalb weiter Grenzen variieren. Sie beträgt bevorzugt 3 bis 200 μm, insbesondere 4 bis 150 μm, vorzugsweise 5 bis 100 μm, wobei die Basisschicht (B) einen Anteil von vorzugsweise 45 bis 97 % an der Gesamtdicke hat.

Die Basisschicht und die anderen Schichten können zusätzlich übliche Additive, wie z. B. Stabilisatoren (UV, Hydrolyse), flammhemmende Stoffe oder Füller, enthalten. Sie werden zweckmäßig dem Polymer bzw. der Polymermischung bereits vor dem Aufschmelzen zugesetzt.

Gegenstand der vorliegenden Erfindung ist auch ein Verfahren zur Herstellung der Folie. Zur Herstellung der erfindungsgemäßen peelfähigen Deckschicht (A) werden zweckmäßiger Weise die jeweiligen Polymere (Polyester I, Polyester II, ggf. weitere Polymere wie z. B. polyesterunverträgliches Polymer (anti-PET-Polymer), Masterbatch(e) für Partikel) direkt dem Extruder für die Deckschicht (A) zugeführt. Die Materialien lassen sich bei etwa 200 bis 280 °C extrudieren. Aus verfahrenstechnischer Sicht (Durchmischung der verschiedenen Komponenten) hat es sich dabei als besonders günstig erwiesen, wenn die Extrusion der Polymere für die Deckschicht (A) mit einem Zweischneckenextruder mit Entgasungsmöglichkeit durchgeführt wird.

Die Polymere für die Basisschicht (B) und für die eventuell vorhandene weitere Deckschicht (C) und gegebenenfalls die Zwischenschicht werden zweckmäßig über weitere Extruder dem (Coextrusions-) System zugeführt. Die Schmelzen werden in einer Mehrschichtdüse zu flachen Schmelzefilmen ausgeformt und übereinander geschichtet. Anschließend wird der Mehrschichtfilm mit Hilfe einer Kühlwalze und gegebenenfalls weiteren Walzen abgezogen und verfestigt.

Die biaxiale Streckung der Folie wird im Allgemeinen sequentiell durchgeführt. Eine simultane Streckung der Folie ist auch möglich, ist aber nicht notwendig. Bei der sequenziellen Streckung wird vorzugsweise erst in Längsrichtung (d. h. in Maschinenrichtung = MD) und anschließend in Querrichtung (d. h. senkrecht zur Maschinenrichtung = TD) gestreckt. Das Strecken in Längsrichtung lässt sich mit Hilfe zweier entsprechend dem angestrebten Streckverhältnis verschieden schnell rotierender Walzen durchführen. Zum Querstrecken benutzt man im Allgemeinen einen entsprechenden Kluppenrahmen.

Die Temperatur, bei der die Streckung durchgeführt wird, kann in einem relativ großen Bereich variieren und richtet sich nach den gewünschten Eigenschaften der Folie. Im Allgemeinen wird die Streckung in Längsrichtung (machine direction orientation = MDO) in einem Temperaturbereich von ca. 60 bis 130 °C (Aufheiztemperaturen 60 bis 130 °C), und in Querrichtung (transverse direction orientation = TDO) in einem Temperaturbereich von ca. 90 °C (Beginn der Streckung) bis 140 °C (Ende der Streckung) durchgeführt. Das Längsstreckverhältnis liegt bevorzugt im Bereich von 2:1 bis 5,5:1, insbesondere von 2,3:1 bis 5,0:1. Das Querstreckverhältnis liegt bevorzugt im Bereich von 2,4:1 bis 5,0:1, insbesondere von 2,6:1 bis 4,5:1.

Der bevorzugte Temperaturbereich, bei der die biaxiale Streckung durchgeführt wird, beträgt bei der Längsstreckung (MDO) 60 bis 120 °C. Die Aufheiztemperaturen der Folie in der Längsstreckung liegen dabei in einem Bereich von 60 bis 115 °C. Bei der Querstreckung (TDO) liegen die Temperaturen der Folie bevorzugt in einem Bereich von 90 °C (Beginn der Streckung) bis 140 °C (Ende der Streckung). Das Längsstreckverhältnis liegt bei diesem bevorzugten Temperaturbereich im Bereich von 2,0:1 bis 5,0:1, bevorzugt von 2,3:1 bis 4,8:1. Das Querstreckverhältnis liegt allgemein im Bereich von 2,4:1 bis 5,0:1, bevorzugt von 2,6:1 bis 4,5:1.

Der besonders bevorzugte Temperaturbereich, bei der die biaxiale Streckung durchgeführt wird, beträgt bei der Längsstreckung (MDO) 60 bis 110 °C. Die Aufheiztemperaturen der Folie in der Längsstreckung liegen dabei in einem Bereich von 60 bis 105 °C. Bei der Querstreckung (TDO) liegen die Temperaturen der Folie in einem Bereich von 90 °C (Beginn der Streckung) bis 140 °C (Ende der Streckung). Das Längsstreckverhältnis liegt bei diesem bevorzugten Temperaturbereich im Bereich von 2,0:1 bis 4,8:1, bevorzugt von 2,3:1 bis 4,6:1. Das Querstreckverhältnis liegt allgemein im Bereich von 2,4:1 bis 5,0:1, bevorzugt von 2,6:1 bis 4,5:1.

Mit den bevorzugten und insbesondere mit den besonders bevorzugten Temperaturen in der MDO wird dem klebrigen Verhalten von Deckschicht (A) auf Walzen (metallische, keramische oder besonders beschichtete Walzenoberflächen) besonders gut Rechnung getragen.

Vor der Querstreckung kann man eine oder beide Oberflächen der Folie nach den an sich bekannten Verfahren In-Line beschichten. Die In-Line-Beschichtung kann beispielsweise zu einer verbesserten Haftung zwischen einer Metallschicht oder einer Druckfarbe und der Folie, zu einer Verbesserung des antistatischen Verhaltens, des Verarbeitungsverhaltens oder auch zur weiteren Verbesserung von Barriereeigenschaften der Folie führen. Letzteres wird beispielsweise durch Auftragung von Barrierebeschichtungen, wie EVOH, PVOH o. ä. enthalten. Vorzugsweise werden solche Schichten dann auf die nicht siegelbare Oberfläche, z. B. die Oberfläche (C) der Folie aufgetragen.

Bei der nachfolgenden Thermofixierung wird zur Erzielung des erfindungsgemäßen Schrumpfes die Folie über eine Zeitdauer von etwa 0,1 bis 10 s bei einer Temperatur von bevorzugt 150 bis 200 °C gehalten. Die eingestellte Fixierzeit und die eingestellte Fixiertemperatur richtet sich allein nach dem gewünschten Schrumpf. Wird ein vergleichsweise hoher Schrumpf gefordert, so ist die Fixierzeit vgl. kurz und die Fixiertemperatur vgl. niedrig einzustellen. Anschließend wird die Folie in üblicher Weise aufgewickelt.

Ein weiterer Vorteil der Erfindung besteht darin, dass die Herstellungskosten der erfindungsgemäßen Folie nicht wesentlich über denen einer Folie aus Standardpolyester liegen. Daneben ist bei der Herstellung der Folie gewährleistet, dass Verschnittmaterial, das bei der Folienherstellung im Betrieb immanent anfällt, als Regenerat in einer Menge von bis zu ca. 60 Gew.-%, bevorzugt 5 bis 50 Gew.-%, jeweils bezogen auf das Gesamtgewicht der Folie, wieder für die Folienherstellung verwendet werden kann, ohne dass dabei die physikalischen Eigenschaften der Folie nennenswert negativ beeinflusst werden.

Die erfindungsgemäße Folie eignet sich z. B. hervorragend zum Verpacken von Nahrungs- und Genussmitteln, insbesondere zur Verpackung von Nahrungs- und Genussmitteln in Menüschalen, bei denen peelfähige Polyesterfolien zum Öffnen der Verpackung verwendet werden.

Die nachstehende Tabelle (Tabelle 1) fasst die wichtigsten bevorzugten Folieneigenschaften noch einmal zusammen.

## Tabelle 1

EP 1 529 797 A1

| Deckschicht (A) bzw. Folie | Erfindungsgemäßer Bereich | Bevorzugt | Besonders bevorzugt | Einheit | Messmethode |
|---|---|---|---|---|---|
| Anteil Einheiten im erfindungsgemäßen Polyester, aufgebaut aus aromatischen Dicarbonsäuren | 12 bis 89 | 30 bis 84 | 40 bis 82 | Mol.-% | |
| Anteil Einheiten im erfindungsgemäßen Polyester, aufgebaut aus aliphatischen Dicarbonsäuren | 11 bis 88 | 16 bis 70 | 18 bis 60 | Mol.-% | |
| Polyester I | 0 bis 50 | 5 bis 45 | 10 bis 40 | Gew.-% | |
| Polyester II | 50 bis 100 | 55 bis 95 | 60 bis 90 | Gew.-% | |
| Partikeldurchmesser $d_{50}$ | 3,0 bis 12 | 3,5 bis 11 | 4,0 bis 10,0 | µm | |
| Füllstoffkonzentration | 2,0 bis 10,0 | 2,5 bis 9,0 | 3,0 bis 8,0 | Gew.-% | |
| Dicke der Deckschicht A | 0,7 bis 8,0 | 1,0 bis 7,0 | 1,3 bis 6,0 | µm | |
| Partikeldurchmesser/Schichtdicken-Verhältnis | >/= 1,5 | >/= 1,7 | >/= 2,0 | | |
| Schrumpf der Folie, zumindest in eine Richtung | >/= 5 | >/= 8 | >/= 10 | % | DIN 40634 |
| **Eigenschaften** | | | | | |
| Dicke der Folie | 3 bis 200 | 4 bis 150 | 5 bis 100 | µm | |
| Mindestsiegeltemperatur von DS (A) gegen PET-Menüschalen | 165 | 160 | 155 | °C | |
| Siegelnahtfestigkeit von DS (A) gegen PET-Menüschalen | 1,5 bis 8 | 2,0 bis 8 | 2,5 bis 8 | N/15 mm | |
| Glanz der Deckschichten A und C | > 70 und > 100 | > 75 und > 110 | > 80 und > 120 | | DIN 67530 |
| Trübung der Folie, transparente Ausführungsform | < 20 | < 16 | < 12 | % | ASTM D 1003-52 |

DS: Deckschicht, >/=: größer/gleich

EP 1 529 797 A1

Zur Charakterisierung der Rohstoffe und der Folien wurden im Rahmen der vorliegenden Erfindung die folgenden Messmethoden benutzt:

Messung des mittleren Durchmessers $d_{50}$

Die Bestimmung des mittleren Durchmessers $d_{50}$ wurde mittels Laserauf einem Malvern Master Sizer (Fa. Malvern Instruments, Ltd., UK) mittels Laserscannung durchgeführt (andere Messgeräte sind z. B. Horiba LA 500 oder Sympathec Helos, welche das gleiche Messprinzip verwenden). Die Proben wurden dazu in eine Küvette mit Wasser gegeben und diese dann in das Messgerät gestellt. Mittels Laser wird die Dispersion abgerastert und aus dem Signal durch Vergleich mit einer Eichkurve die Partikelgrößenverteilung bestimmt. Die Partikelgrößenverteilung ist durch zwei Parameter gekennzeichnet, den Medianwert $d_{50}$ (= Lagemaß für den Mittelwert) und das Streumaß, der sog. SPAN98 (= Maß für die Streuung des Partikeldurchmessers). Der Messvorgang ist automatisch und beinhaltet auch die mathematische Bestimmung des $d_{50}$-Wertes. Der $d_{50}$-Wert wird dabei definitionsgemäß aus der (relativen) Summenkurve der Partikelgrößenverteilung bestimmt: Der Schnittpunkt des 50 % Ordinatenwertes mit der Summenkurve liefert auf der Abszissenachse den gewünschten $d_{50}$-Wert (auch Median genannt).

Messung der SPAN98

Die Bestimmung des Streumaßes, der SPAN98, wurde mit dem gleichen Messgerät durchgeführt wie oben bei der Bestimmung des mittleren Durchmessers $d_{50}$ beschrieben. Der SPAN98 ist dabei wie folgt definiert:

$$SPAN98 = \frac{d_{98} - d_{10}}{d_{50}}$$

Der Ermittlung von $d_{98}$ und $d_{10}$ wird wiederum die (relative) Summenkurve der Partikelgrößenverteilung (s. o. "Messung des mittleren Durchmessers $d_{50}$) zu Grunde gelegt. Der Schnittpunkt des 98 %-Ordinatenwertes mit der Summenkurve liefert auf der Abszissenachse sofort den gewünschten $d_{98}$-Wert und der Schnittpunkt des 10 %- Ordinatenwertes mit der Summenkurve liefert auf der Abszissenachse den gewünschten $d_{10}$-Wert.

SV-Wert

Der SV-Wert des Polymers wurde durch die Messung der relativen Viskosität ($\eta_{rel}$) einer 1%-igen Lösung in Dichloressigsäure in einem Ubbelohde-Viskosimeter bei 25 °C bestimmt. Der SV-Wert ist wie folgt definiert:

$$SV = (\eta_{rel}-1) \cdot 1000.$$

Glasübergangstemperaturen $T_g$

Die Glasübergangstemperatur $T_g$ wurde anhand von Folienproben mit Hilfe der DSC (Differential Scanning Calorimetry) bestimmt. Verwendet wurde ein DSC 1090 der Fa. Perkin-Elmer. Die Aufheizgeschwindigkeit betrug 20 K/min und die Einwaage ca. 12 mg. Um die thermische Vorgeschichte zu eliminieren, wurden die Proben zunächst auf 300 °C aufgeheizt, 5 Minuten gehalten und dann anschließend mit flüssigem Stickstoff abgeschreckt. Aus dem Thermogramm wurde die Temperatur für den Glasübergang $T_g$ als die Temperatur bei halber Stufenhöhe entnommen.

Siegelnahtfestigkeit (Peelkraft)

Zur Bestimmung der Siegelnahtfestigkeit wird ein Folienstreifen (100 mm lang x 15 mm breit) auf einen entsprechenden Streifen der Menüschale gelegt und bei der eingestellten Temperatur von > 140 °C, einer Siegelzeit von 0,5 s und einem Siegeldruck von 4 bar (Siegelgerät HSG/ET der Firma Brugger, DE; beidseitig beheizte Siegelbacke) gesiegelt. Entsprechend Figur 2 werden die gesiegelten Streifen in die Zugprüfmaschine (z. B. Fa. Zwick, DE) eingespannt und die 180°-Siegelnahtfestigkeit, d. h. die zur Auftrennung der Prüfstreifen benötigte Kraft, mit einer Abzugsgeschwindigkeit von 200 mm/min bestimmt. Die Siegelnahtfestigkeit wird in N pro 15 mm Folienstreifen angegeben (z. B. 3 N/15 mm).

Bestimmung der Mindestsiegeltemperatur

Mit dem Siegelgerät HSG/ET der Firma Brugger werden wie zuvor bei der Messung der Siegelnahtfestigkeit beschrieben, heißgesiegelte Proben (Siegelnaht 15 mm x 100 mm) hergestellt, wobei die Folie bei unterschiedlichen Temperaturen mit Hilfe zweier beheizter Siegelbacken bei einem Siegeldruck von 4 bar und einer Siegeldauer von 0,5 s gesiegelt wird. Die 180°-Siegelnahtfestigkeit wurde wie bei der Bestimmung der Siegelnahtfestigkeit gemessen. Die Mindestsiegeltemperatur ist die Temperatur, bei der eine Siegelnahtfestigkeit von mindestens 1,0 N/15 mm erreicht wird.

Rauigkeit

Die Rauigkeit $R_a$ der Folie wurde nach DIN 4768 bei einem Cut-off von 0,25 mm bestimmt. Es wurde dabei nicht auf einer Glasplatte, sondern im Ring gemessen. Bei der Ringmethode wird die Folie in einen Ring eingespannt, so dass keine der beiden Oberflächen eine dritte Oberfläche (z. B. Glas) berührt.

Weißgrad

Der Weißgrad wird nach Berger bestimmt, wobei in der Regel mehr als 20 Folienlagen aufeinander gelegt werden. Die Bestimmung des Weißgrades erfolgt mit Hilfe des elektrischen Remissionsphotometers ®ELREPHO der Firma Zeiss, Oberkochem (DE), Normlichtart C, 2°-Normalbeobachter. Der Weißgrad wird als WG = RY + 3RZ - 3RX definiert. WG = Weißgrad, RY, RZ, RX = entsprechende Reflexionsfaktoren bei Einsatz des Y-, Z- und X-Farbmessfilters. Als Weißstandard wird ein Pressling aus Bariumsulfat (DIN 5033, Teil 9) verwendet. Eine ausführliche Beschreibung ist z. B. in Hansl Loos "Farbmessung", Verlag Beruf und Schule, Itzehoe (1989), beschrieben.

Lichttransmission/Transparenz

Unter der Lichttransmission/Transparenz ist das Verhältnis des insgesamt durchgelassenen Lichtes zur einfallenden Lichtmenge zu verstehen. Die Lichttransmission wird mit dem Messgerät "Hazegard plus" (Fa. Pausch-Messtechnik, Haan, DE) nach ASTM-D 1003 gemessen.

Glanz

Der Glanz der Folie wurde nach DIN 67530 bestimmt. Gemessen wurde der Reflektorwert als optische Kenngröße für die Oberfläche einer Folie. Angelehnt an die Normen ASTM-D 523-78 und ISO 2813 wurde der Einstrahlwinkel mit 20° eingestellt. Ein Lichtstrahl trifft unter dem eingestellten Einstrahlwinkel auf die ebene Prüffläche und wird von dieser reflektiert bzw. gestreut. Die auf den photoelektronischen Empfänger auffallenden Lichtstrahlen werden als proportionale elektrische Größe angezeigt. Der Messwert ist dimensionslos und muss mit dem Einstrahlwinkel angegeben werden.

Reißfestigkeit

Die Reißfestigkeit der Folie wurde nach DIN 53455 gemessen. Die Prüfgeschwindigkeit ist 1 %/min; 23 °C; 50 % r.F.

E-Modul

Der E-Modul der Folie wurde nach DIN 53457 gemessen. Die Prüfgeschwindigkeit ist 1 %/min; 23 °C; 50 % r.F.

Schrumpf

Der Schrumpf der Folie wurde nach DIN 40634 bestimmt. Die Prüfbedingungen sind 100 °C, 15 min.
Im Folgenden wird die Erfindung anhand von Beispielen näher erläutert.

Beispiel 1

Chips aus Polyethylenterephthalat wurden bei 160 °C auf eine Restfeuchte von weniger als 50 ppm getrocknet und dem Extruder für die Basisschicht (B) zugeführt. Ebenfalls wurden Chips aus Polyethylenterephthalat und Partikeln dem Extruder (Zweischneckenextruder mit Entgasung) für die nicht siegelfähige Deckschicht (C) zugeführt. Entsprechend den in unten stehender Tabelle aufgeführten Verfahrensbedingungen wurden die Rohstoffe in den beiden jeweiligen Extrudern aufgeschmolzen und homogenisiert.

Daneben wurde für die heißsiegelbare und peelfähige Deckschicht (A) eine Mischung bestehend aus Polyester I, Polyester II und SiO$_2$-Partikeln hergestellt. In Tabelle 2 sind die jeweiligen Anteile der in beiden Polyestern I und II enthaltenen Dicarbonsäuren und Glykole in Mol-% und die jeweiligen Anteile der in der Mischung enthaltenen Komponenten in Gew.-% angegeben. Die Mischung wurde dem Zweischneckenextruder mit Entgasung für die siegelbare und peelfähige Deckschicht (A) zugeführt. Entsprechend den in untenstehender Tabelle angeführten Verfahrensbedingungen wurden die Rohstoffe in dem Zweischneckenextruder aufgeschmolzen und homogenisiert.

Dann wurden durch Coextrusion in einer Dreischichtdüse die drei Schmelzeströme übereinander geschichtet und über die Düsenlippe ausgestoßen. Der resultierende Schmelzefilm wurde abgekühlt und anschließend über eine stufenweise Orientierung in Längs- und Querrichtung eine dreischichtige Folie mit ABC-Aufbau in einer Gesamtdicke von 25 μm hergestellt. Die Dicke der Deckschicht (A) beträgt 3,0 μm. Die Dicke der Deckschicht (C) beträgt 1,1 μm. (vgl. auch Tabelle 2).

Deckschicht (A), Mischung aus:

| | |
|---|---|
| 45,0 Gew.-% | Polyester I (= Copolymeres aus 78 Mol-% Ethylenterephthalat, 22 Mol-% Ethylenisophthalat) mit einem SV-Wert von 850. Die Glasübergangstemperatur von Polyester I beträgt ca. 75 °C. Polyester I enthält darüber hinaus 10,0 Gew.-% ®Sylysia 440 (synthetisches SiO$_2$ , Fuji, Japan) mit einem Partikeldurchmesser von d$_{50}$ = 5,5 μm und einem SPAN98 von 1,8. Das Verhältnis von Partikeldurchmesser d$_{50}$ zu Deckschichtdicke d$_{(A)}$ beträgt 1,83:1 (vgl. Tabelle 2); |
| 55 Gew.-% | Polyester II (= Copolymeres enthaltend 40 Mol-% Ethylenazelat, 50 Mol-% Ethylenterephthalat, 10 Mol-% Ethylenisophthalat) mit einem SV-Wert von 1000. Die Glasübergangstemperatur von Polyester II beträgt ca. 0 °C. |

Basisschicht (B):

| | |
|---|---|
| 100 Gew.-% | Polyethylenterephthalat mit einem SV-Wert von 800 |

Deckschicht (C), Mischung aus:

| | |
|---|---|
| 85 Gew.-% | Polyethylenterephthalat mit einem SV-Wert von 800 |
| 15 Gew.-% | Masterbatch aus 99 Gew.-% Polyethylenterephthalat (SV-Wert von 800) und 1,0 Gew.-%Sylobloc® 44 H (synthetisches SiO$_2$, Fa. Grace, Worms), d$_{50}$ = 2,5 μm, SPAN98 = 1,9 |

Die Herstellungsbedingungen in den einzelnen Verfahrensschritten waren:

| Extrusion | Temperaturen | A-Schicht:<br>B-Schicht:<br>C-Schicht: | 230<br>280<br>280 | °C<br>°C<br>°C |
|---|---|---|---|---|
| | Temperatur der Abzugswalze | | 20 | °C |
| Längsstreckung | Aufheiztemperatur | | 70-100 | °C |
| | Strecktemperatur | | 102 | °C |
| | Längsstreckverhältnis | | 3,8 | |
| Querstreckung | Aufheiztemperatur | | 100 | °C |
| | Strecktemperatur | | 130 | °C |
| | Querstreckverhältnis | | 3,5 | |
| Fixierung | Temperatur | | 160 | °C |
| | Dauer | | 2 | s |

In Tabelle 3 sind die Eigenschaften der Folie dargestellt. Laut Messungen (Spalte 2), beträgt die Mindestsiegeltemperatur der Folie gegenüber CPET-Menüschalen 152 °C. Die Folie wurde bei 160, 180 und 200 °C gegen die CPET-Menüschalen gesiegelt (Siegeldruck 4 bar, Siegelzeit 0,5 s). Anschließend wurden Streifen des Verbundes aus erfindungsgemäßer Folie und CPET-Menüschale mittels Spannungs-Dehnungstester entsprechend der vorgenannten Messvorschrift (vgl. Figur 2) auseinander gezogen. Für alle Siegeltemperaturen zeigte sich das gewünschte Abschälen der Folien von der Menüschale gemäß Figur 3b. Die gemessenen Siegelnahtfestigkeiten sind in Spalte 3 gelistet. Für alle Siegeltemperaturen wurden peelfähige Folien erhalten. Die Siegelnahtfestigkeiten liegen im unteren Bereich, d. h. dass sich die Folien ohne Kraftanstrengung von der Menüschale abziehen lassen. Darüber hinaus zeichnet sich die Folie durch eine selbsttätige Entlüftung aus, hatte die geforderten guten optischen Eigenschaften, zeigte das gewünschte Handling und das gewünschte Verarbeitungsverhalten.

Beispiel 2

Im Vergleich zu Beispiel 1 wurde die Zusammensetzung der Mischung für die siegelfähige Deckschicht (A) geändert. Die Zusammensetzung der einzelnen Komponenten blieb im Vergleich zu Beispiel 1 unverändert. Die Mischung besteht jetzt aus den folgenden Rohstoffanteilen:

- Polyester I = 40 Gew.-%
- Polyester II = 60 Gew.-%

Auf Grund des höheren Anteils von Polyester II in der Mischung wurden die Verfahrensparameter in der Längsstreckung modifiziert. Die neuen Bedingungen für die Längsstreckung sind in untenstehender Tabelle aufgelistet.

| Längsstreckung | Aufheiztemperatur | | 70-95 | °C |
|---|---|---|---|---|
| | Strecktemperatur | | 97 | °C |
| | Längsstreckverhältnis | | 3,7 | |

Die Mindestsiegeltemperatur der Folie gegenüber CPET-Menüschalen beträgt jetzt 150 °C. Für alle Siegeltemperaturen zeigte sich das gewünschte Abschälen der Folien von der Menüschale gemäß Figur 3b. Die gemessenen Siegelnahtfestigkeiten sind in Spalte 3 gelistet. Für alle Siegeltemperaturen wurden wiederum peelfähige Folien erhalten. Die Siegelnahtfestigkeiten der erfindungsgemäßen Folien sind höher als im Beipiel 1. Sie liegen in einem mittleren Bereich, so dass sich die Folie ohne wesentliche Kraftanstrengung von der Menüschale abziehen lässt. Die selbsttätige Entlüftung, die optischen Eigenschaften, das Handling und das Verarbeitungsverhalten der Folie waren wie in Beipiel 1.

Beispiel 3

Vergleich zu Beispiel 2 wurde die Zusammensetzung der Mischung für die siegelfähige Deckschicht (A) geändert. Die Zusammensetzung der einzelnen Komponenten blieb im Vergleich zu Beispiel 1 unverändert. Die Mischung besteht jetzt aus den folgenden Rohstoffanteilen:

- Polyester I = 30 Gew.-%
- Polyester II = 70 Gew.-%

Auf Grund des höheren Anteils von Polyester II in der Mischung wurden die Verfahrensparameter in der Längsstreckung modifiziert. Die neuen Bedingungen für die Längsstreckung sind in untenstehender Tabelle aufgelistet.

| Längsstreckung | Aufheiztemperatur | | 70-90 | °C |
|---|---|---|---|---|
| | Strecktemperatur | | 93 | °C |
| | Längsstreckverhältnis | | 3,5 | |

Die Mindestsiegeltemperatur der Folie gegenüber CPET-Menüschalen beträgt jetzt 149 °C. Für alle Siegeltemperaturen zeigte sich das gewünschte Abschälen der Folien von der Menüschale gemäß Figur 3b. Die gemessenen Siegelnahtfestigkeiten sind in Spalte 3 gelistet. Für alle Siegeltemperaturen wurden wiederum peelfähige Folien erhalten. Die Siegelnahtfestigkeiten der erfindungsgemäßen Folien sind vergleichbar zu Beipiel 1. Die selbsttätige Entlüftung, die optischen Eigenschaften, das Handling und das Verarbeitungsverhalten der Folie waren wie in Beipiel 1.

Beispiel 4

Im Vergleich zu Beispiel 3 wurde die Zusammensetzung von Poyester II für die siegelfähige Deckschicht (A) geändert. Die verwendete Mischung in Deckschicht (A) besteht jetzt aus folgenden Rohstoffanteilen:

20 Gew.-%    Polyester I, identisch zu Beispiel 1, bis auf die Konzentration für das Antiblockmittel. Polyester I enthält jetzt 20,0 Gew.-% ®Sylysia (synthetisches $SiO_2$, Fuji, Japan) mit einem Partikeldurchmesser von $d_{50}$ = 5,5 μm und einem SPAN98 von 1,8;

80 Gew.-%    Polyester II, ®Vitel1912 (Polyester, Bostik-Findley, USA), enthält die Dicarbonsäure-Bestandteile Azelainsäure, Sebazinsäure, Terephthalsäure, Isophthalsäure und weitere Dicarbonsäuren etwa im Molverhältnis 40/1/45/10/4 und als Diolkomponente mindestens 60 Mol-% Ethylenglykol). Die Glasübergangstemperatur von Polyester II beträgt ca. -1°C.

Daneben wurde auch die Basisschicht (B) geändert. Die Basisschicht (B) besteht jetzt aus folgenden Rohstoffanteilen:

Basisschicht (B):

100 Gew.-%    Copolymer enthaltend 12mol-% Ethylen Isophthalat und 88mol-% Ethylenterephthalat mit einem SV-Wert von 760.

Die Verfahrensparameter in der Längsstreckung entsprachen denjenigen in Beispiel 3. Die Mindestsiegeltemperatur der erfindungsgemäß hergestellen Folie gegenüber CPET-Menüschalen beträgt jetzt 138 °C. Für alle Siegeltemperaturen zeigte sich das gewünschte Abschälen der Folien von der Menüschale gemäß Figur 3b. Die gemessenen Siegelnahtfestigkeiten sind in Spalte 3 gelistet. Für alle Siegeltemperaturen wurden wiederum peelfähige Folien erhalten. Die Siegelnahtfestigkeiten liegen in einem mittleren Bereich, so dass sich die Folie ohne große Kraftanstrengung von der Menüschale abziehen lässt. Die selbsttätige Entlüftung, die optischen Eigenschaften, das Handling und das Verarbeitungsverhalten der Folie waren wie in Beipiel 1.

Vergleichsbeispiel 1

Im Vergleich zu Beispiel 1 wurde die Zusammensetzung der siegelfähigen Schicht (A) geändert. In der Deckschicht (A) wurde nur der auf Basis von aromatischen Säuren aufgebaute Polyester I verwendet:

Deckschicht (A):

100,0 Gew.-%    Polyester I (= Copolymeres aus 78 Mol-% Ethylenterephthalat und 22 Mol-% Ethylenisophthalat) mit einem SV-Wert von 850. Die Glasübergangstemperatur von Polyester I beträgt ca. 75 °C. Polyester I enthält darüber hinaus 5,0 % ®Sylysia 430

Die Herstellungsbedingungen in den einzelnen Verfahrensschritten wurden in der Längsstreckung der Glasübergangstemperatur des Deckschichtrohstoffes angepasst:

| Längsstreckung | Aufheiztemperatur | | 70-115 | °C |
|---|---|---|---|---|
| | Strecktemperatur | | 120 | °C |
| | Längsstreckverhältnis | | 4,0 | |

In Tabelle 3 sind die Eigenschaften der Folie dargestellt. Obwohl die Siegelschicht hochpigmentiert ist und die Pigmente Schwachstellen in der Siegelschicht darstellen, wurde für keine der angegebenen Siegeltemperaturen eine peelfähige Folie erhalten. Beim Abziehen der Folie von der Menüschale riss die Folie direkt ein und zeigte ein Kraft-Weg-Diagramm gemäß Figur 3a. Die Folie zeigt "weldable" Verhalten und ist damit für die Lösung der genannten Aufgabe ungeeignet.

Vergleichsbeispiel 2

Es wurde das Beispiel 1 aus der WO 02/26493 nachgearbeitet. In Tabelle 3 sind die Eigenschaften der Folie dargestellt. Die Folie zeigt zwar die wünschenswerte selbsttätige Entlüftung, ist jedoch in der Herstellung mehr als doppelt so teuer wie die zuvor angegegeben Lösungen. Außerdem kam es zu einer deutlich sichtbaren Fädenbildung bei der Trennung des Laminats von der Menüschale (eventuell wegen der fehlenden Pigmentierung und dem zu hohen Anteil an aliphatischer Komponente).

Vergleichsbeispiel 3

Es wurde das Beispiel 5 aus der EP-A-0 035 835 nachgearbeitet. In Tabelle 3 sind die Eigenschaften der Folie dargestellt. Es wurde für keine der angegebenen Siegeltemperaturen eine peelfähige Folie erhalten. Beim Abziehen der Folie von der Menüschale riss die Folie direkt ein und zeigte ein Kraft-Weg-Diagramm gemäß Figur 3a. Die Folie zeigt "weldable" Verhalten und ist damit für die Lösung der genannten Aufgabe ungeeignet.

Vergleichsbeispiel 4

Es wurde das Beispiel 1 aus der EP-A-0 379190 nachgearbeitet. In Tabelle 3 sind die Eigenschaften der Folie dargestellt. Es wurde für keine der angegebenen Siegeltemperaturen eine peelfähige Folie erhalten. Beim Abziehen der Folie von der Menüschale riss die Folie direkt ein und zeigte ein Kraft-Weg-Diagramm gemäß Figur 3a. Die Folie zeigt "weldable" Verhalten und ist damit für die Lösung der genannten Aufgabe ungeeignet.

Vergleichsbeispiel 5

Es wurde das Beispiel 22 aus der EP-A-0 379190 nachgearbeitet. In Tabelle 3 sind die Eigenschaften der Folie dargestellt. Es wurde für keine der angegebenen Siegeltemperaturen eine peelfähige Folie erhalten. Beim Abziehen der Folie von der Menüschale riss die Folie direkt ein und zeigte ein Kraft-Weg-Diagramm gemäß Figur 3a. Die Folie zeigt "weldable" Verhalten und ist damit für die Lösung der genannten Aufgabe ungeeignet.
Die Zusammensetzung der Folien ist in Tabelle 2, die gemessenen Folieneigenschaften sind in Tabelle 3 zusammengefasst.

## Tabelle 2

EP 1 529 797 A1

| | | Zusammensetzung Polyester I | | | | Zusammensetzung Polyester II | | | | | | | | Verhältnisse PI/PII/ AntiPET-Polymer | Glastemperaturen PI/PII/ AntiPET-Polymer | Folienaufbau | Foliendicke | Deckschicht-Dicken | | Partikel in (A) | | | Verhältnis $d_{50}/d_{(A)}$ |
| | | TS | IS | EG | NG | AzS | SeS | AdS | TS | IS | EG | BD | WS | | | | | (A) | (C) | Durchmesser | SPAN 98 | Konzentration | |
| | | Mol-% | | | | Mol-% | | | | | | | | Gew.-% | °C | | µm | µm | | µm | - | Gew.-% | |
| **Beispiele** | 1 | 78 | 22 | 100 | | 40 | | | 50 | 10 | 100 | | | 45/55 | 75/0 | ABC | 25 | 3 | 1,1 | 5,5 | 1,8 | 4,50 | 1,83 |
| | 2 | 78 | 22 | 100 | | 40 | | | 50 | 10 | 100 | | | 40/60 | 75/0 | ABC | 25 | 3 | 1,1 | 5,5 | 1,8 | 4,00 | 1,83 |
| | 3 | 78 | 22 | 100 | | 40 | | | 50 | 10 | 100 | | | 30/70 | 75/0 | ABC | 25 | 3 | 1,1 | 5,5 | 1,8 | 3,00 | 1,83 |
| | 4 | 78 | 22 | 100 | | 40 | 1 | | 45 | 10 | >60 | | 4 | 20/80 | 75/-1 | ABC | 25 | 3 | 1,1 | 5,5 | 1,8 | 4,00 | 1,83 |
| **Vergleichsbeispiele** | 1 | 78 | 22 | 100 | | - | - | - | - | - | - | - | - | 100/0/0/ | 75 | ABC | 25 | 3 | 1 | 5,5 | 1,8 | 5 | 1,83 |
| | 2 | - | - | - | | 45 | - | - | 55 | - | 100 | - | - | - | 75 | ABC | 70 | 2 | - | - | - | - | |
| | 3 | 82 | 18 | 100 | | - | - | - | - | - | - | - | - | 100/0/0/ | 75 | AB | 20 | 2,98 | - | 1,5+5 | - | 0,3 | 1,68 |
| | 4 | - | - | - | | | 10 | | 90 | | 100 | | | 0/100/0/ | ca. 50 | AB | 17,2 | 4,1 | - | - | - | - | - |
| | 5 | 100 | - | 85 | 15 | - | 32 | 2,4 | 65 | 1 | 95 | | 4,6 | 50/50/0/ | ca. 20 | AB | 11,5 | 2,5 | - | 2 | - | 0,25 | 0,8 |

TS Terephthalat, IS Isophthalat, EG Ethylen, BD Butan, NG Neopentyl

AzS Azelat, SeS Sebazat, AdS Adipat, WS weitere Dicarbonsäuren und Glykole

**Tabelle 3**

| | | Menü-schale | Mindestsie-geltempe-ratur | Siegelnahtfestigkeit gegenüber Menüschalen | | | Schältest (= Peel-verhalten) | Trübung | Schrumpf in TD-Richtung | Rauhigkeit $R_a$ | |
|---|---|---|---|---|---|---|---|---|---|---|---|
| | | | | 160°C | 180°C | 200°C | | | | A-Seite | C-Seite |
| | | | °C | N/15 mm | | | | % | % | nm | |
| Beispiele | 1 | CPET | 152 | 1,7 | 2,4 | 4,4 | ++++ | 15 | 8 | 225 | 60 |
| | 2 | CPET | 150 | 2,1 | 3,8 | 7,1 | ++++ | 12 | 8 | 220 | 60 |
| | 3 | CPET | 149 | 1,5 | 2,6 | 5,1 | ++++ | 11 | 8 | 210 | 60 |
| | 4 | CPET | 138 | 4,8 | 4,7 | 6,1 | ++++ | 13 | 10 | 222 | 60 |
| Vergleichsbeispiele | 1 | CPET | 105 | 3,5 | 5,0 | 8,0 | - | 12 | - | 310 | 60 |
| | 2 | CPET | 109 | 4,5 | 5,0 | 6,5 | ++ | 10 | 50 | 35 | 60 |
| | 3 | CPET | 109 | 4,2 | 5,5 | 8,1 | - | - | - | 69 | 25 |
| | 4 | CPET | 112 | 2,0 | 4,0 | 6,0 | - | - | - | 33 | 20 |
| | 5 | CPET | 110 | 3,0 | 4,0 | 5,0 | - | - | - | 120 | 22 |

Schältest:  ++++:  Bei allen Siegeltemperaturen wird Folie von der Menüschale "gepeelt", ohne dass dabei die Folie ein- oder weiterreißt. Einwandfreies, sattes, sauberes Peelen der Folie von Menüschale, auch im oberen Temperaturbereich bei hoher Siegelnahtfestigkeit

-:  Bei allen Siegeltemperaturen reißt Folie beim Abziehen von der Menüschale ein

++:  zwischen ++++ und -

**Patentansprüche**

1.  Coextrudierte, biaxial orientierte Polyesterfolie, welche eine Basisschicht (B) und eine heißsiegelbare und gegenüber APET/CPET und CPET peelfähige Deckschicht (A) aufweist, wobei die Deckschicht (A)

    a) 80 bis 98 Gew.-% Polyester und
    b) 2 bis 10 Gew.-% anorganische und/oder organische Partikel mit einem mittleren Durchmesser $d_{50}$ von 3 bis 12 $\mu$m
    enthält und wobei
    c) der Polyester zu 12 bis 89 Mol-% aus Einheiten aufgebaut ist, die auf mindestens eine aromatische Dicarbonsäure und zu 11-88 Mol-% aus Einheiten aufgebaut ist, die auf mindestens eine aliphatische Dicarbonsäure zurückgehen,
    wobei die Summe der dicarbonsäureabgeleiteten Molprozente 100 ergibt, und
    d) das Verhältnis aus Teilchengröße $d_{50}$ der Partikel und Schichtdicke $d_A$ der Deckschicht (A) größer/gleich 1,5 ist,

    und der Schrumpf der Folie zumindest in einer Richtung mehr als 5 % beträgt, gemessen bei 100 °C über eine Dauer von 15 min.

2.  Polyesterfolie nach Anspruch 1, **dadurch gekennzeichnet, dass** die Schichtdicke der Deckschicht (A) $d_A$ 0,7 bis 8 $\mu$m beträgt.

3.  Polyesterfolie nach Anspruch 1 oder 2, **dadurch gekennzeichnet, dass** die aromatischen Dicarbonsäuren ausgewählt sind aus einer oder mehreren der folgenden Substanzen: Terephthalsäure, Isophthalsäure und 2,6-Naphthalindicarbonsäure.

4.  Polyesterfolie nach einem oder mehreren der Ansprüche 1 bis 3, **dadurch gekennzeichnet, dass** die aliphatischen Dicarbonsäuren ausgewählt sind aus einer oder mehreren der folgenden Substanzen: Bernsteinsäure, Pimelinsäure, Korksäure, Azelainsäure, Sebazinsäure, Glutarsäure und Adipinsäure.

5.  Polyesterfolie nach einem oder mehreren der Ansprüche 1 bis 4, **dadurch gekennzeichnet, dass** der Polyester der Deckschicht (A) 12 bis 89 Mol-% Terephthalat, 0 bis 25 Mol-% Isophthalat, 11 bis 88 Mol-% Azelat, 0 bis 50 Mol-% Sebazat, 0 bis 50 Mol-% Adipat und mehr als 30 Mol-% Ethylen oder Butylen enthält, jeweils bezogen auf die Gesamtdicarboxylat- bzw. Gesamtalkylenmenge.

6.  Polyesterfolie nach einem oder mehreren der Ansprüche 1 bis 5, **dadurch gekennzeichnet, dass** die Deckschicht (A) eine Mindestsiegeltemperatur gegenüber APET/CPET oder CPET Menüschalen von nicht mehr als 165 °C aufweist.

7.  Polyesterfolie nach einem oder mehreren der Ansprüche 1 bis 6, **dadurch gekennzeichnet, dass** die Deckschicht (A) eine Siegelnahtfestigkeit gegenüber APET/CPET oder CPET Menüschalen von mindestens 1 N/15 mm Folienbreite aufweist.

8.  Polyesterfolie nach einem oder mehreren der Ansprüche 1 bis 7, **dadurch gekennzeichnet, dass** der Polyester der Deckschicht (A) aus zwei Polyestern I und II hergestellt wird.

9.  Polyesterfolie nach einem oder mehreren der Ansprüche 1 bis 8, **dadurch gekennzeichnet, dass** der Polyester I aus einem oder mehreren aromatischen Dicarboxylaten und einem oder mehreren aliphatischen Alkylenen besteht.

10. Polyesterfolie nach einem oder mehreren der Ansprüche 1 bis 9, **dadurch gekennzeichnet, dass** der Polyester I Terephthalat-, Isophthalat- und Ethyleneinheiten enthält.

11. Polyesterfolie nach einem oder mehreren der Ansprüche 1 bis 10, **dadurch gekennzeichnet, dass** der Anteil des Polyesters I in der Deckschicht (A) 0 bis 50 Gew.-% beträgt.

12. Polyesterfolie nach einem oder mehreren der Ansprüche 1 bis 11, **dadurch gekennzeichnet, dass** der Polyester I eine Glasübergangstemperatur von mehr als 50 °C aufweist.

**13.** Polyesterfolie nach einem oder mehreren der Ansprüche 1 bis 12, **dadurch gekennzeichnet, dass** der Polyester II aus einem oder mehreren aliphatischen und aus einem oder mehreren aromatischen Dicarboxylaten und aus einem oder mehreren aliphatischen Alkylenen besteht.

**14.** Polyesterfolie nach einem oder mehreren der Ansprüche 1 bis 13, **dadurch gekennzeichnet**, das der Polyester II Azelat-, Terephthalat-, Isophthalat- und Ethyleneinheiten enthält.

**15.** Polyesterfolie nach einem oder mehreren der Ansprüche 1 bis 14, **dadurch gekennzeichnet, dass** der Anteil des Polyesters II in der Deckschicht (A) 50 bis 100 Gew.-% beträgt.

**16.** Polyesterfolie nach einem oder mehreren der Ansprüche 1 bis 15, **dadurch gekennzeichnet, dass** der Polyester II eine Glasübergangstemperatur von weniger als 20 °C aufweist.

**17.** Polyesterfolie nach einem oder mehreren der Ansprüche 1 bis 16, **dadurch gekennzeichnet, dass** die Folie dreischichtig ist und einen A-B-C-Aufbau aufweist.

**18.** Polyesterfolie nach einem oder mehreren der Ansprüche 1 bis 17, **dadurch gekennzeichnet, dass** neben der Deckschicht (A) auch die Deckschicht (C) anorganische oder organische Partikel enthält.

**19.** Polyesterfolie nach einem oder mehreren der Ansprüche 1 bis 18, **dadurch gekennzeichnet, dass** die Partikel in der Deckschicht (A) einen SPAN 98 von ≤ 2,0 aufweisen.

**20.** Polyesterfolie nach einem oder mehreren der Ansprüche 1 bis 19, **dadurch gekennzeichnet, dass** die Basisschicht (B) zu mindestens 80 Gew.-% aus thermoplastischem Polyester besteht.

**21.** Polyesterfolie nach einem oder mehreren der Ansprüche 1 bis 20, **dadurch gekennzeichnet, dass** der Polyester der Basisschicht (B) Terephthalat- und/oder Isophthalat- und Ethyleneinheiten enthält.

**22.** Verfahren zur Herstellung einer Polyesterfolie nach einem oder mehreren der Ansprüche 1 bis 21, umfassend die Schritte

   a) Herstellen einer mehrschichtigen Folie durch Coextrusion und Ausformen der Schmelzen zu flachen Schmelzefilmen,
   b) biaxiales Strecken der Folie und
   c) Thermofixieren der gestreckten Folie.

**23.** Verfahren nach Anspruch 22, **dadurch gekennzeichnet, dass** zur Erhöhung des Schrumpfes der Folie die Fixierzeit und die Fixiertemperatur bei derThermofixierung erniedrigt werden.

**24.** Verwendung einer Polyesterfolie nach einem oder mehreren der Ansprüche 1 bis 21 als Deckelfolie für APET/CPET oder CPET Menüschalen.

Peelfähige PET-Folie
Siegelbare Deckschicht (A)
Fertiggericht

Peelfähige PET-Folie
Fertiggericht

APET
CPET

CPET-tray

APET/CPET-tray

a) Menüschale aus CPET

b) Menüschale aus APET/CPET

**Fig. 1** Menüschalen (trays) PET mit Fertiggericht und von Menüschale abziehbare (peelfähige) Folie

PET-Folie

CPET-Streifen

Deckschicht (A)

**Fig. 2** Anordnung von "peelfähiger" Folie und Streifen einer CPET Menüschale im Zug-Dehnungs-Messgerät

**Fig. 3a** Reiss-Dehnungsdiagramm einer Folie mit "weldable" Verhalten

**Fig. 3b** Reiss-Dehnungsdiagramm einer Folie mit "peelable" Verhalten

**Fig. 4** Reiss-Dehnungs-Verhalten von Folien mit "weldable" und "peelable" Verhalten

**Fig. 5** Zusammenhang zwischen Siegeltemperatur in °C und Peelkraft in N/15mm

**Europäisches Patentamt**

**EUROPÄISCHER RECHERCHENBERICHT**

Nummer der Anmeldung

EP 04 02 5891

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | WO 03/026892 A1 (DUPONT TEIJIN FILMS U.S. LIMITED PARTNERSHIP; DAWES, MARK, EDWARD) 3. April 2003 (2003-04-03) * Seite 1, Zeilen 3-7 * * Seite 3, Zeile 30 - Seite 4, Zeile 31 * * Seite 6, Zeile 4 - Seite 7, Zeile 33 * * Seite 8, Zeile 25 - Seite 13, Zeile 32 * * Seite 14, Zeile 21 - Seite 15, Zeile 23 * * Seite 17, Zeilen 10-14 * * Seite 19, Zeile 26 - Seite 22, Zeile 29 * * Seite 25, Zeile 22 - Seite 30, Zeile 14; Ansprüche 10-12,31-35; Abbildungen * ----- | 1-24 | C08J5/18 B32B27/36 |
| X,D | WO 02/26493 A1 (DUPONT TEIJIN FILMS U.S. LIMITED PARTNERSHIP; DAWES, MARK, EDWARD) 4. April 2002 (2002-04-04) * Seite 1, Zeilen 3-5 * * Seite 2, Zeile 29 - Seite 4, Zeile 22 * * Seite 5, Zeilen 8-28 * * Seite 8, Zeile 30 - Seite 10, Zeile 17 * * Seite 11, Zeile 9 - Seite 12, Zeile 16 * * Seite 16, Zeile 9 - Seite 19, Zeile 8 * * Seite 20, Zeile 11 - Seite 22, Zeile 8; Ansprüche 9,10,15; Abbildungen * ----- | 1-24 | RECHERCHIERTE SACHGEBIETE (Int.Cl.7) C08J B32B |
| X | EP 1 176 005 A2 (MITSUBISHI POLYESTER FILM GMBH) 30. Januar 2002 (2002-01-30) * Absätze [0001], [0012], [0020] - [0024], [0026] - [0032], [0037], [0041] - [0045]; Ansprüche * ----- -/-- | 1-24 | |

Der vorliegende Recherchenbericht wurde für alle Patentansprüche erstellt

| Recherchenort | Abschlußdatum der Recherche | Prüfer |
|---|---|---|
| München | 1. Februar 2005 | Otegui Rebollo, J |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
........................................................................
& : Mitglied der gleichen Patentfamilie, übereinstimmendes Dokument

EPO FORM 1503 03.82 (P04C03)

**Europäisches Patentamt**

## EUROPÄISCHER RECHERCHENBERICHT

Nummer der Anmeldung

EP 04 02 5891

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X,D | WO 02/059186 A1 (DUPONT TEIJIN FILMS U.S. LIMITED PARTNERSHIP; SANKEY, STEPHEN, WILLIAM) 1. August 2002 (2002-08-01) * Seite 1, Zeilen 3-10 * * Seite 5, Zeilen 2-32 * * Seite 7, Zeile 22 - Seite 8, Zeile 9 * * Seite 8, Zeile 29 - Seite 10, Zeile 17 * * Seite 11, Zeile 20 - Seite 12, Zeile 32 * * Seite 16, Zeile 13 - Seite 18, Zeile 12; Ansprüche; Abbildungen; Beispiele * ----- | 1-24 | |
| | | | **RECHERCHIERTE SACHGEBIETE (Int.Cl.7)** |

Der vorliegende Recherchenbericht wurde für alle Patentansprüche erstellt

| Recherchenort | Abschlußdatum der Recherche | Prüfer |
|---|---|---|
| München | 1. Februar 2005 | Otegui Rebollo, J |

**ANHANG ZUM EUROPÄISCHEN RECHERCHENBERICHT**
**ÜBER DIE EUROPÄISCHE PATENTANMELDUNG NR.**                    EP 04 02 5891

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

01-02-2005

| Im Recherchenbericht angeführtes Patentdokument | | Datum der Veröffentlichung | Mitglied(er) der Patentfamilie | | Datum der Veröffentlichung |
|---|---|---|---|---|---|
| WO 03026892 | A1 | 03-04-2003 | EP | 1444098 A1 | 11-08-2004 |
| WO 0226493 | A1 | 04-04-2002 | AU | 9010801 A | 08-04-2002 |
| | | | CN | 1466520 T | 07-01-2004 |
| | | | EP | 1322468 A1 | 02-07-2003 |
| | | | JP | 2004509789 T | 02-04-2004 |
| | | | US | 2004052993 A1 | 18-03-2004 |
| EP 1176005 | A2 | 30-01-2002 | DE | 10036407 A1 | 07-02-2002 |
| | | | JP | 2002103549 A | 09-04-2002 |
| | | | US | 2002045039 A1 | 18-04-2002 |
| WO 02059186 | A1 | 01-08-2002 | CN | 1489613 T | 14-04-2004 |
| | | | EP | 1362075 A1 | 19-11-2003 |
| | | | JP | 2004518007 T | 17-06-2004 |
| | | | US | 2004067284 A1 | 08-04-2004 |

EPO FORM P0461

Für nähere Einzelheiten zu diesem Anhang : siehe Amtsblatt des Europäischen Patentamts, Nr.12/82